(19) **Europäisches Patentamt / European Patent Office / Office européen des brevets**

(11) **EP 2 960 625 B1**

(12) **FASCICULE DE BREVET EUROPEEN**

(45) Date de publication et mention de la délivrance du brevet:
**14.11.2018 Bulletin 2018/46**

(51) Int Cl.:
***G01C 19/5747*** *(2012.01)*

(21) Numéro de dépôt: **15173393.8**

(22) Date de dépôt: **23.06.2015**

(54) **CAPTEUR INERTIEL ANGULAIRE MEMS FONCTIONNANT EN MODE DIAPASON**

MEMS-DREHRATENSENSOR, DER IM STIMMGABELMODUS BETRIEBEN WIRD

MEMS ANGULAR INERTIAL SENSOR IN TUNING FORK MODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2014 FR 1401451**

(43) Date de publication de la demande:
**30.12.2015 Bulletin 2015/53**

(73) Titulaire: **THALES**
**92400 Courbevoie (FR)**

(72) Inventeurs:
• **Chaumet, Bernard**
**86100 CHATELLERAULT (FR)**
• **Filhol, Fabien**
**26027 VALENCE Cedex (FR)**
• **Rougeot, Claude**
**69007 LYON (FR)**
• **Leverrier, Bertrand**
**26027 VALENCE Cedex (FR)**

(74) Mandataire: **Desvignes, Agnès et al**
**Marks & Clerk France**
**Immeuble Visium**
**22, avenue Aristide Briand**
**94117 Arcueil Cedex (FR)**

(56) Documents cités:
**WO-A1-2014/177542      WO-A2-2013/083534**
**US-A1- 2010 139 399**

EP 2 960 625 B1

**Description**

L'invention concerne un capteur inertiel vibrant, micro-usiné dans une plaque mince plane, permettant la mesure d'une position angulaire (gyroscope) ou d'une vitesse angulaire (gyromètre).

La fabrication de ces capteurs micro-usinés dits encore capteurs à MEMS (Micro-Electro-Mechanical-Systems), utilise des techniques de micro-usinage collectif, gravure, dépôts dopage, etc., semblables à celles qui sont utilisées pour la fabrication de circuits intégrés électroniques, permettant des faibles coûts de production.

On connaît déjà de tels capteurs inertiels MEMS réalisés sur une plaque de silicium ou de quartz par micro-usinage. La structure est plane, dans le plan du substrat de silicium ou de quartz dans laquelle elle est gravée.

Ces capteurs sont constitués de plusieurs masses mobiles vibrantes reliées entre elles et à leur support par des éléments élastiques de manière à constituer un résonateur d'excitation, ou résonateur primaire, et un résonateur de détection, ou résonateur secondaire, les deux résonateurs étant couplés entre eux par l'accélération de Coriolis. Ces capteurs disposent de moyens d'excitation, de détection, et souvent d'équilibrage. Dans ces capteurs, les masses sont généralement excitées en vibration dans le plan XY de la plaque, perpendiculairement à un axe Z, dit « axe sensible » du gyromètre. Lorsque le gyromètre tourne autour de son axe sensible, la composition de la vibration forcée avec le vecteur de rotation angulaire engendre, par effet Coriolis, des forces qui mettent les masses mobiles en vibration naturelle perpendiculairement à la vibration d'excitation et à l'axe sensible ; l'amplitude de cette vibration naturelle est proportionnelle à la vitesse de rotation. La vibration naturelle est détectée par un transducteur de détection, dont les signaux électriques sont exploités par un circuit électronique pour en déduire une valeur de la vitesse angulaire autour de l'axe sensible.

Différentes structures de capteurs inertiels vibrants à MEMS sont connues qui définissent les formes et dispositions des différents éléments de la structure. Ces différents éléments vont être typiquement les éléments vibrants, les mécanismes de suspension de ces éléments, les mécanismes de couplage ; les transducteurs électrostatiques d'excitation et de détection permettant la mesure proprement dite et les transducteurs électrostatiques permettant différents équilibrages ou compensations permettant d'améliorer la précision de la mesure.

Ces structures sont élaborées pour satisfaire différentes contraintes, de précision de mesure, de faibles pertes d'énergie, tout en restant dans le domaine des technologies de fabrication des MEMS.

Les performances de tels capteurs peuvent être dégradées par les pertes d'énergie des résonateurs vers l'extérieur. Pour limiter ces pertes d'énergie, le résonateur d'excitation de la plupart des gyromètres est équilibré au premier ordre par l'utilisation de deux masses vibrant en opposition de phase, tel un diapason. Le mode de vibration utile en opposition de phase est séparé du mode parasite en phase grâce à un élément élastique de couplage central qui introduit une raideur entre les deux masses. Un exemple d'un tel capteur est décrit dans le brevet FR2846740. Cependant dans de tels capteurs des pertes d'énergie subsistent, car le résonateur secondaire n'est pas équilibré par construction. De ce fait, ce mode transmet un couple sur le support du diapason, ce qui rend ce mode sensible aux conditions de fixation sur le support et aux perturbations extérieures transmises par le support.

Des structures de gyromètre en diapason comprenant des moyens de couplage élastiques entre les branches du diapason, sont bien connues et décrites dans la littérature brevet. Dans ces structures on exploite donc les vibrations des masses en opposition de phase en séparant le mode utile de vibration des modes parasites. Pour améliorer la précision de mesure, ces structures proposent différents moyens d'ajustement ou de compensation, que ce soit par construction et/ou par l'utilisation d'éléments de compensation ou d'ajustement commandés électriquement.

Des structures à double diapason, utilisant quatre masses ont également été proposées pour compenser par construction les défauts d'équilibrage du résonateur secondaire de la structure diapason simple. Les brevets FR2859527, FR2983574 et FR2859528 en donnent des exemples.

Dans ces différentes structures, des imperfections d'équilibrage résiduels des résonateurs subsistent, ainsi que des couplages parasites entre le mode d'excitation et le mode de détection, qui peuvent être dus aux déséquilibres des différents moyens élastiques de suspension et de couplage utilisés.

La présente invention propose une architecture de capteur à masses mobiles rigides axisymétriques, réalisable par micro-usinage collectif dans une plaque mince plane de silicium (ou de quartz) et fonctionnant en mode diapason. L'architecture est équilibrée par construction et bien isolée de son environnement extérieur. Elle peut être complétée par des moyens de compensation et d'équilibrage électrostatique permettant la compensation des défauts de réalisation de la structure. Elle permet notamment une excitation de la vibration dans n'importe quelle direction du plan perpendiculaire à l'axe sensible Z.

Cette architecture comprend deux masses mobiles concentriques, qui sont suspendues et couplées entre elles par des ressorts, et qui vibrent en mode diapason, sans axe privilégié dans le plan XY de la plaque : le mode de vibration utile correspond à une vibration linéaire des deux masses en opposition de phase aussi bien selon un axe X que selon un axe Y orthogonal à l'axe X.

Cette architecture forme un système résonant à deux masses suspendues, couplées entre elles par des éléments élastiques, qui présente peu de modes de vibrations parasites et qui permet une bonne séparation entre ces modes et le mode de vibration utile ; un mode de vibration parasite correspondrait par exemple à une vibration linéaire des deux masses en phase, à une fréquence d'autant plus séparée de la fréquence du mode utile que la raideur du couplage entre les deux masses est plus élevée.

De plus, toutes les structures mécaniques et les transducteurs du capteur selon cette architecture peuvent être réalisées dans une seule couche active de silicium, ce qui permet leur fabrication avec un seul masque de photolithographie et une étape de gravure unique. Cela limite considérablement les imperfections géométriques et les contraintes mécaniques parasites et cela permet d'obtenir une structure avec peu de défauts avant même l'application de compensations.

L'invention concerne ainsi un capteur angulaire inertiel micro-usiné comprenant au moins deux masses vibrantes usinées dans une plaque support généralement plane, mobiles par rapport à la plaque et mobiles l'une par rapport à l'autre, suspendues à des points d'ancrage fixes de la plaque par des ressorts de suspension et couplées entre elles par des ressorts de couplage pour vibrer en opposition de phase.

Selon l'invention, le capteur comprend :

- au moins un transducteur d'excitation d'un mouvement de vibration d'une des masses selon une direction X dans le plan de la plaque, un transducteur d'excitation de cette masse selon une direction Y perpendiculaire à la direction X et dans le plan de la plaque, un transducteur de détection d'une vibration d'une des masses selon la direction X et un transducteur de détection d'une vibration d'une des masses selon la direction Y ; les transducteurs d'excitation (Ex, Ey) et de détection (Dx, Dy) comprennent chacun une paire de peignes interdigités ayant un peigne mobile formé d'une rangée de dents solidaires de la masse vibrante et un peigne fixe formé d'une rangée de dents solidaires d'une électrode fixe, l'interdigitation des dents au repos étant dissymétrique,

- au moins un premier transducteur électrostatique d'ajustement de fréquence, en peignes interdigités à interdigitation symétrique au repos, apte à appliquer une raideur électrostatique ajustable à la masse vibrante selon la direction X, et un deuxième transducteur électrostatique d'ajustement de fréquence semblable au premier et apte à appliquer à la masse vibrante une raideur électrostatique ajustable selon la direction Y,

- les deux masses vibrantes mobiles sont disposées l'une autour de l'autre, en une masse interne et une masse externe, et leurs centres de gravité sont confondus au repos,

- les ressorts de couplage sont reliés chacun d'un côté à la masse interne et de l'autre à la masse externe et ils ont des raideurs identiques selon la direction X et selon la direction Y,

- les raideurs des ressorts de suspension de la masse interne sont identiques selon la direction X et selon la direction Y et les raideurs des ressorts de suspension de la masse externe sont identiques selon la direction X et selon la direction Y, et elles sont proportionnelles aux valeurs des masses respectives,

- l'ensemble mobile constitué par chaque masse vibrante et les parties de transducteurs solidaires de cette masse a une structure généralement symétrique par rapport à un axe de symétrie OX parallèle à la direction X et passant par le centre de gravité de la masse, et également généralement symétrique par rapport à un axe de symétrie OY parallèle à la direction Y et passant par le centre de gravité de la masse.

On exposera plus loin des cas particuliers où la structure généralement symétrique n'est pas à 100% symétrique, ces cas étant liés principalement au fait que certains transducteurs électrostatiques auxiliaires de la structure peuvent être des peignes interdigités à interdigitation symétrique au repos alors que les transducteurs électrostatiques principaux d'excitation et de détection sont de préférence des peignes à interdigitation dissymétrique au repos. On expliquera plus loin les différences de symétrie minimes qui peuvent en résulter et qui entrent cependant dans le cadre de la symétrie générale des ensembles mobiles de l'invention.

Selon une caractéristique particulièrement avantageuse du capteur, on prévoit de préférence qu'au moins une des masses vibrantes est couplée à au moins un transducteur électrostatique de compensation d'un biais en quadrature positif (Q+) et au moins un transducteur électrostatique de compensation d'un biais en quadrature négatif (Q-), permettant de modifier la répartition des raideurs agissant sur la masse vibrante de façon à aligner les axes principaux de raideur dynamique sur les axes de symétrie OX et OY.

Le ou les transducteurs électrostatiques de compensation de biais en quadrature sont agencés de préférence selon l'une des dispositions suivantes :

- une paire de transducteurs agissant en compensation de biais positif et en compensation de biais négatif selon la direction X et une autre paire agissant en compensation de biais positif et en compensation de biais négatif selon la direction Y,

- une paire de transducteurs agissant respectivement en positif et en négatif, ces transducteurs comportant chacun des peignes doubles ayant des dents orientées selon la direction X et des dents orientées selon la direction Y,

- un transducteur de compensation du biais positif agissant selon l'une des directions X et Y, et un transducteur de compensation du biais négatif agissant selon l'autre direction orthogonale à la première.

De préférence encore, la disposition géographique par rapport à l'axe de symétrie OX des transducteurs de compensation de biais en quadrature est identique, si on fait abstraction de leur polarité d'action, à leur disposition géographique par rapport à l'axe de symétrie OY.

Les masses vibrantes interne et externe ont de préférence des valeurs de masse égales et les raideurs des ressorts de suspension de ces masses sont alors identiques.

De préférence, la disposition géographique, par rapport à l'axe de symétrie OX, des transducteurs d'excitation et de détection, mais éventuellement aussi des transducteurs d'ajustement de fréquence, travaillant selon la direction X est identique à la disposition géographique par rapport à l'axe OY des transducteurs exerçant les mêmes fonctions mais travaillant selon la direction Y.

Chacun des transducteurs associés à une masse vibrante peut être formé de deux paires de peignes interdigités disposés symétriquement par rapport à la direction d'action ou de détection X ou Y du transducteur, avec l'une des configurations suivantes :

- le transducteur est divisé en deux transducteurs disposés de part et d'autre de la masse vibrante, c'est-à-dire que les deux peignes mobiles sont disposés symétriquement de part et d'autre de la masse vibrante et les deux peignes fixes sont disposés de part et d'autre de la masse vibrante, également symétriquement sauf dans le cas de transducteurs de compensation d'un biais en quadrature ;
- ou bien les dents des peignes mobiles sont situées symétriquement de part et d'autre d'une électrode fixe à l'intérieur d'une ouverture de la masse vibrante, cette dernière entourant la paire de peignes et l'électrode fixe.

De préférence, chacune des deux masses vibrantes mobiles comporte des transducteurs d'excitation, des transducteurs de détection, et éventuellement aussi des transducteurs d'ajustement de fréquence et des transducteurs de compensation de biais en quadrature. On s'arrange alors pour que la configuration générale de l'ensemble des masses mobiles, et des peignes mobiles associés à ces masses soit globalement symétrique par rapport à l'axe de symétrie OX et également par rapport à l'axe de symétrie OY, de préférence selon une symétrie d'ordre 4, c'est-à-dire une invariance de la configuration lorsqu'on fait tourner l'ensemble de 90° autour de l'axe OZ, et ceci avec l'exception possible de dissymétries mineures dues directement ou indirectement au fait que les transducteurs d'ajustement de fréquence sont à interdigitation symétrique au repos contrairement aux autres transducteurs, et au fait que les transducteurs de compensation de biais en quadrature peuvent avoir des polarités d'action qui n'ont pas une symétrie d'ordre 4.

On peut prévoir avantageusement que le nombre des dents de peigne de chaque type de transducteur (excitation, ou détection, ou ajustement de fréquence, ou compensation de biais en quadrature) est identique sur les deux masses, ceci pour chaque direction X et Y de façon à optimiser la similitude des effets physiques s'exerçant sur les deux masses.

D'une manière générale, les caractéristiques mécaniques et notamment la répartition des masses des ensembles mobiles (masses proprement dites et peignes mobiles ou parties mobiles des transducteurs qui sont solidaires des masses) et les raideurs des bras de suspension et les raideurs des bras de couplage sont telles que ces ensembles mobiles n'ont, par construction, pas d'axe de vibration privilégié dans le plan XY. La symétrie globale des ensembles mobiles permet de réduire la sensibilité du capteur aux perturbations qui induiraient des dé-positionnements statiques des masses mobiles, par exemple des accélérations statiques ou des contraintes.

Dans une configuration judicieuse des transducteurs (à peignes interdigités), pour chaque masse mobile, on prévoit que :

- la direction d'action ou de détection de chaque transducteur électrostatique est orientée parallèlement à l'axe de symétrie OX ou bien parallèlement à l'axe de symétrie OY ;
- la configuration des dents des peignes interdigités de chaque transducteur (au moins pour les peignes d'excitation et de détection) est symétrique par rapport à un axe parallèle à l'axe d'action ou de détection du transducteur, c'est-à-dire parallèle à l'axe de symétrie X ou à l'axe de symétrie Y selon le cas ;
- pour chaque masse vibrante, la disposition générale des transducteurs par rapport à l'axe de symétrie OX est la même que la disposition des transducteurs par rapport à l'axe de symétrie OY.

S'il y a des transducteurs de compensation du biais en quadrature, la similitude de disposition des transducteurs autour des axes X et Y est obtenue soit en disposant une paire de transducteurs avec des électrodes en peigne selon X agissant en positif et en négatif et une autre paire avec des électrodes en peigne disposées selon Y agissant en positif et en négatif, soit en réalisant deux transducteurs (pour le biais en quadrature positif et le biais en quadrature négatif respectivement) avec des peignes doubles ayant des dents orientées selon les deux directions X et Y, soit enfin en prévoyant un transducteur de compensation du biais en quadrature positif disposé selon un des axes, X par exemple, et un transducteur de compensation du biais en quadrature négatif disposé selon l'autre axe, Y dans ce cas.

Si on s'intéresse maintenant à la similitude de disposition des transducteurs sur les deux masses interne et externe, on prévoit de préférence que chacune des deux masses dispose d'au moins un transducteur électrostatique d'excitation pour la direction X et un autre pour la direction Y, un transducteur électrostatique de détection pour la direction X et un autre pour la direction Y, un transducteur électrostatique d'ajustement de fréquence pour la direction X et un autre pour la direction Y, et de préférence aussi au moins un transducteur de compensation de biais en quadrature agissant sur les biais positifs et un transducteur de compensation de biais en quadrature agissant sur les biais négatifs.

Les transducteurs d'excitation et de détection à interdigitation dissymétrique sont disposés de préférence sur la masse vibrante interne et sur la masse externe avec un sens de dissymétrie inverse, aussi bien selon la direction X que selon la direction Y.

Les transducteurs sont bien entendu associés à des circuits électroniques qui permettent leur fonctionnement selon des principes connus.

Enfin, dans le cas particulièrement avantageux où le capteur comporte des transducteurs de compensation de biais en quadrature de phase, l'invention propose avantageusement un procédé de compensation des défauts d'anisotropie du capteur qui comprend les étapes successives suivantes :

- une première étape d'alignement précis des axes principaux de raideur dynamique de l'ensemble mobile sur les directions X et Y, obtenue par l'ajustement de tensions appliquées aux transducteurs de compensation du biais en quadrature,
- et une deuxième étape d'égalisation des fréquences de résonance selon la direction X et selon la direction Y, obtenue par l'ajustement de tensions appliquées aux transducteurs d'ajustement de fréquence.

D'autres caractéristiques et avantages de l'invention apparaîtront à la lecture de la description détaillée qui suit et qui est faite en référence aux dessins annexés dans lesquels :

- la figure 1 représente le principe général de constitution du résonateur mécanique selon l'invention ; les transducteurs ne sont pas représentés ;
- la figure 2 représente des formes de ressorts de suspension ou de couplage des masses ;
- la figure 3 représente une variante d'agencement des deux masses vibrantes ;
- la figure 4 et la figure 5 représentent d'autres variantes ;
- la figure 6 représente le schéma de principe, connu, d'un transducteur à peignes interdigités à interdigitation dissymétrique ;
- la figure 7 représente le schéma de principe d'un transducteur d'ajustement de fréquence à peignes à interdigitation symétrique ;
- la figure 8 représente une disposition symétrique d'un transducteur double composé de deux transducteurs opposés à la périphérie d'une masse vibrante ;
- la figure 9 représente une disposition symétrique d'un transducteur dans une ouverture d'une masse vibrante ;
- la figure 10 représente une disposition possible des transducteurs à la périphérie d'une masse vibrante ;
- la figure 11 représente une autre configuration où les transducteurs sont placés dans des ouvertures de la masse vibrante ;
- la figure 12 représente une disposition dans laquelle des transducteurs de compensation de biais en quadrature sont prévus dans une ouverture de la masse vibrante ;
- la figure 13 représente une disposition dans laquelle les transducteurs de compensation de biais sont situés à la périphérie de la masse ;
- la figure 14 et la figure 15 représentent d'autres constitutions possibles des transducteurs de compensation de biais ;
- la figure 16 représente une configuration complète des masses vibrantes avec leurs transducteurs, seule la masse interne étant associée à des transducteurs ;
- les figures 17, 18, 19, 20 représentent différentes configurations possibles d'ensembles mobiles avec leurs transducteurs, dans lesquelles les deux masses vibrantes comportent des transducteurs de chaque type; et
- la figure 21 met en évidence des aspects de constitutions et dispositions de transducteurs de compensation de biais en quadrature positif et négatif.

On rappelle d'abord sommairement les principes de fabrication d'un capteur inertiel MEMS : une plaque mince de silicium est usinée pour faire un gyromètre dont l'axe sensible Z est perpendiculaire au plan XY de la plaque et dont les mouvements d'excitation et de détection sont situés dans le plan de la plaque.

Le silicium est choisi comme matériau préférentiel, d'une part pour ses propriétés mécaniques et d'autre part pour sa conductivité élevée lorsqu'il est suffisamment dopé par une impureté appropriée (du bore en général pour du silicium de type P). Le silicium conducteur permet de réaliser les fonctions électriques du capteur, notamment les fonctions de transduction électromécanique qui sont généralement réalisées par des électrodes en peignes capacitifs interdigités alimentés en courant ou en tension électrique ; les dents de ces peignes, directement usinées dans le silicium conducteur, servent d'armature de condensateurs utiles aux fonctions d'excitation et aux fonctions de détection.

L'épaisseur de la plaque de silicium est par exemple de quelques centaines de micromètres, la plaque comporte d'une part des zones d'ancrage fixes formées dans cette épaisseur et d'autre part la structure vibrante proprement dite, libre par rapport aux zones d'ancrage et formée sur une épaisseur plus faible, par exemple sur une épaisseur de quelques dizaines de micromètres, isolée du reste de l'épaisseur de la plaque par un intervalle vide. Sur cette épaisseur de quelques dizaines de micromètres, la plaque de silicium est découpée par micro-usinage selon les motifs désirés de masses vibrantes, de structures de couplage entre masses, de ressorts de suspension et de peignes interdigités.

Pour simplifier les explications, le principe général du capteur inertiel vibrant selon l'invention va maintenant être décrit en s'intéressant d'abord à la configuration des masses vibrantes, des structures de suspension de ces masses par rapport aux points d'ancrage fixe, et des structures de couplage élastique entre ces masses. On expliquera ensuite la configuration des différents transducteurs électrostatiques d'excitation qui agissent sur ces masses et des transducteurs électrostatiques de détection qui détectent leur vibration naturelle. Puis, on décrira la disposition des transducteurs électrostatiques d'ajustement de fréquence ou de compensation de biais. Enfin, on décrira diverses possibilités de disposition complètes des transducteurs sur les masses vibrantes.

## Configuration des masses vibrantes

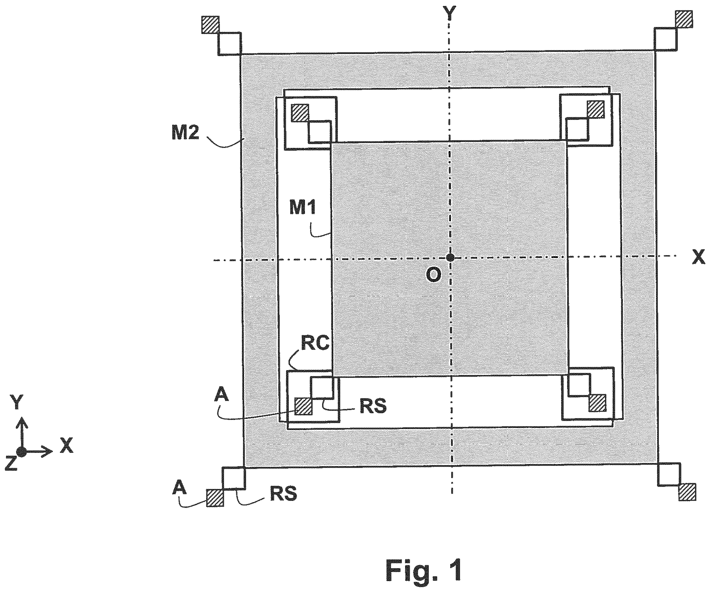

Le principe du résonateur mécanique selon l'invention est schématiquement illustré en vue de dessus sur la figure 1. Il comprend deux masses mobiles, M1 et M2, planes, concentriques, vibrant en mode diapason, c'est-à-dire en opposition de phase, dans leur propre plan. Ce plan XY est le plan de la figure.

On note OX et OY deux axes orthogonaux dans le plan de la plaque et un axe OZ perpendiculaire au plan. Les axes OX et OY constituent deux axes de symétrie de la masse M1 ainsi que de la masse M2. On appellera direction X une direction parallèle à l'axe OX et direction Y une direction parallèle à l'axe OY.

Les deux masses sont disposées l'une autour de l'autre en une masse interne M1 et une masse externe M2 et ont leurs centres de gravité confondus au repos. Le centre de gravité ramené dans le plan du dessin est désigné par O sur la figure.

Les directions X et Y sont les directions privilégiées d'excitation de la vibration des masses mais une excitation combinée est possible. De même, les directions X et Y sont des directions privilégiées de détection des mouvements et elles peuvent être combinées. Cette excitation et cette détection sont réalisées de manière connue par des transducteurs électrostatiques en peignes interdigités, au moins un de chaque type pour chacune des directions X et Y. De manière bien connue, ces peignes interdigités comprennent un peigne mobile solidaire de la masse mobile associée et un peigne fixe solidaire du substrat du capteur. Les dents des peignes sont perpendiculaires à la direction X ou à la direction Y et en cela l'excitation ou la détection selon X ou Y est privilégiée.

Chacune des masses a une forme géométrique plane qui présente globalement une symétrie d'ordre 4 par rapport à l'axe OZ, c'est-à-dire que la forme générale reste globalement inchangée lorsqu'on fait tourner la masse de 90°. On reviendra sur des cas particuliers où une dissymétrie minime de forme peut subsister.

Chacune des masses mobiles est suspendue par des ressorts de suspension RS à des points d'ancrage fixe A. Les raideurs des ressorts de suspension de la masse interne sont identiques selon la direction X et la direction Y, égales à une valeur notée K1. Les raideurs des ressorts de suspension de la masse externe sont identiques selon la direction X et la direction Y égale à une valeur notée K2. Et les raideurs des ressorts de suspension sont proportionnelles aux valeurs de masse respectives m1 et m2 des masses interne M1 et externe M2, ce qui s'écrit : K1/m1 = K2/m2. Les masses m1 et m2 sont cependant de préférence égales et par conséquent les raideurs K1 et K2 aussi. Dans la suite, on note Ks la raideur des ressorts de suspension.

Les deux masses sont reliées entre elles par des ressorts de couplage RC, de raideur Kc égale selon la direction X et la direction Y. Chacun de ces ressorts est fixé d'un côté à la masse interne, de l'autre à la masse externe.

La structure de l'ensemble mobile constitué des masses interne et externe, des ressorts de couplage et de suspension orthotropes (identiques dans les directions X et Y), ainsi que les transducteurs d'excitation et de détection selon chacune des directions X et Y est une structure qui est symétrique par rapport à l'axe de symétrie OX et également symétrique par rapport à l'axe de symétrie OY.

L'identité (ou isotropie) de raideur des ressorts de suspension dans les directions X et Y est obtenue en prévoyant que ces ressorts comportent chacun au moins deux bras orthogonaux de même longueur formant un L ayant une extrémité solidaire d'un point d'ancrage et une extrémité fixée à la masse mobile. De même, pour les ressorts de couplage, les extrémités du L étant solidaires de chacune des masses mobiles.

Sur la figure 1, on a représenté les ressorts RS et RC comme comprenant chacun deux structures en L partant des mêmes points, c'est-à-dire que chaque ressort est constitué par les quatre branches d'un carré dont les côtés sont parallèles aux axes de symétrie OX et OY et dont deux coins opposés sont fixés à une masse d'un côté et à un point d'ancrage ou à l'autre masse de l'autre côté. On prévoit quatre ressorts de suspension RS disposés aux quatre coins de chaque masse mobile, et quatre ressorts de couplage RC entre masses, également aux quatre coins. Les longueurs des côtés des L ou des carrés sont plus grandes pour les ressorts de couplage que pour les ressorts de suspension, la raideur Kc étant a priori plus faible que la raideur Ks.

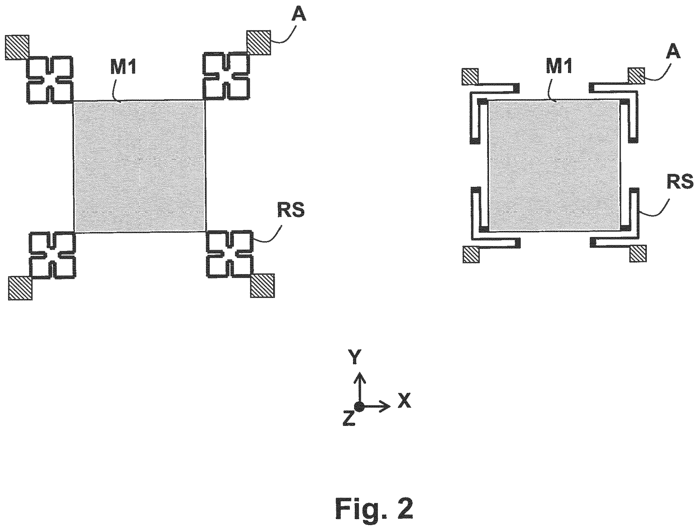

La figure 2 représente d'autres formes possibles de ressorts de suspension à raideurs identiques selon la direction X et selon la direction Y. La raideur désirée est ajustée par le choix des dimensions géométriques des ressorts : longueur, largeur, épaisseur et nombre des bras. Des bras repliés peuvent offrir une plus grande longueur utile donc une plus faible raideur. des formes semblables sont possibles pour les ressorts de couplage.

Sur la figure 1, on a représenté la masse interne par un simple carré et la masse externe par un cadre qui entoure ce carré. Si les masses doivent être identiques, les raideurs des ressorts de suspension étant alors identiques pour les deux masses, les surfaces occupées par le carré et le cadre dans la vue en plan doivent être identiques. Dans cet exemple de la figure 1, les points d'ancrage de la masse interne sont situés entre la masse interne et la masse externe et les ressorts de couplage entourent ces points d'ancrage.

Les ressorts de suspension sont avantageusement placés aux coins des carrés pour être les plus éloignés possibles les uns des autres, de façon à limiter les mouvements parasites en rotation. Il serait également possible de les placer n'importe où ailleurs, dès lors que leur fonction n'est pas altérée et que la symétrie d'ordre 4 reste respectée.

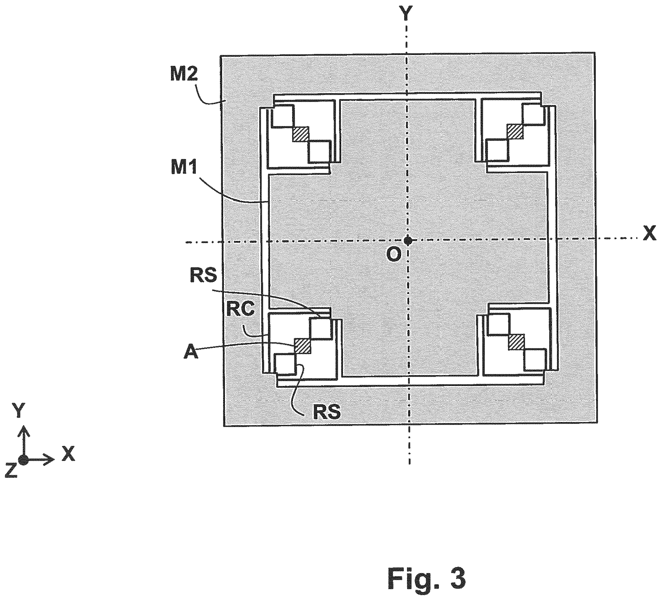

La figure 3 représente une variante dans laquelle : les points d'ancrage A de la masse interne sont confondus avec les points d'ancrage de la masse externe ; les ressorts de suspension des deux masses sont situés de part et d'autre de ces points d'ancrage ; les ressorts de couplage RC entourent les points d'ancrage et les ressorts de suspension RS ; la masse interne est constituée en forme de croix pour occuper au mieux la place disponible à l'intérieur de la masse externe tout en laissant une place dans les coins aux ressorts et aux points d'ancrage. On notera que les deux forces de réaction provenant de la déformation des ressorts de suspension s'annulent sur chaque point d'ancrage.

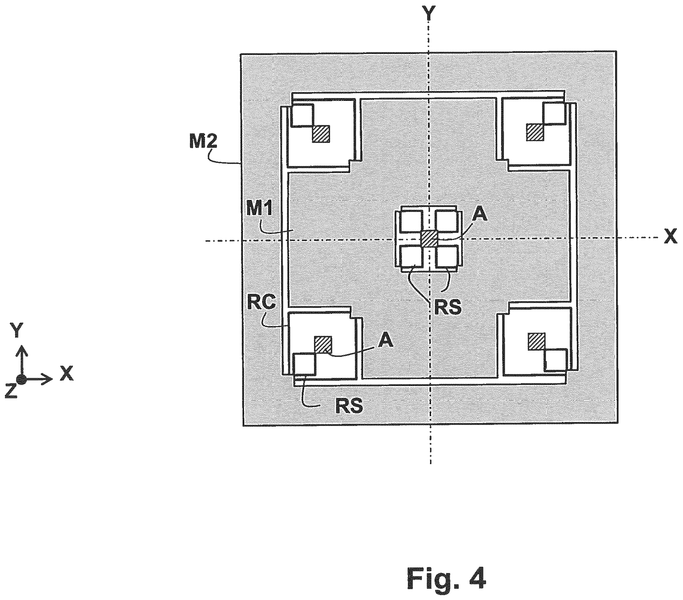

La figure 4 représente une autre variante dans laquelle les quatre ressorts de suspension orthotropes RS de la masse interne sont disposés au centre de celle-ci, dans une ouverture ménagée à cet effet, et reliés au même point d'ancrage A. On peut même envisager d'avoir dans cette ouverture quatre points d'ancrage différents et un ressort de suspension orthotrope associé à chacun d'eux.

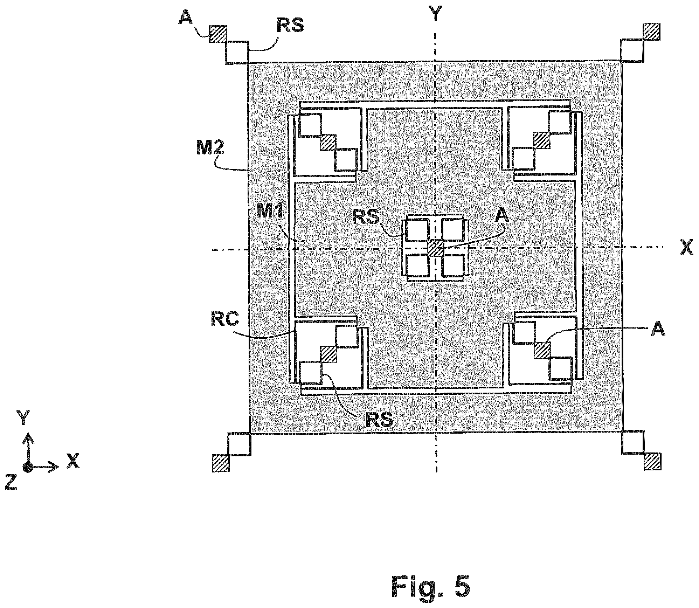

La figure 5 représente un autre exemple destiné à améliorer la robustesse mécanique de la structure ou à mieux séparer le mode de vibration utile (vibration des masses en opposition de phase) des modes parasites avec des mouvements de rotation ou des mouvements en dehors du plan. Dans cet exemple, il y a un plus grand nombre de ressorts de suspension (huit par masse mobile). La symétrie d'ordre 4 reste cependant respectée, c'est-à-dire que le dessin général de l'ensemble mobile comprenant les masses et les ressorts de suspension et de couplage reste invariant lors d'une rotation de 90° autour de l'axe OZ.

Lorsque l'ensemble de la structure est ainsi rendu globalement symétrique, avec des suspensions orthotropes (c'est-à-dire identiques selon les directions X et Y), les mouvements des deux masses couplées seront parallèles (mais en opposition de phase) et on pourra à l'aide de transducteurs appropriés agissant selon les directions X et Y entretenir une vibration forcée selon n'importe quelle direction du plan XY sans axe privilégié, y compris une direction variable continûment, c'est-à-dire un mouvement de précession; la vibration est isotrope dans le plan XY.

Un mode de vibration parasite éventuel, en phase et non en opposition de phase, peut exister, mais sa fréquence est d'autant plus écartée de la fréquence du mode de vibration utile que la raideur des ressorts de couplage est plus grande. La fréquence du mode utile est proportionnelle à la racine carrée de (Ks+2Kc) alors que la fréquence du mode parasite est proportionnelle à la racine carrée de Ks, où Ks et Kc sont les raideurs respectives des ressorts de suspension et de couplage.

Pour exciter le mode de vibration utile dans une direction donnée quelconque du plan, on décompose le signal d'excitation en deux composantes d'amplitudes respectives ajustées, appliquées respectivement aux transducteurs d'excitation agissant selon la direction X et aux transducteurs d'excitation agissant selon la direction Y.

Lorsque le gyromètre tourne autour de son axe sensible Z, l'effet Coriolis engendre des forces qui mettent les masses mobiles en vibration naturelle perpendiculairement à la vibration d'excitation et à l'axe sensible ; l'amplitude de cette vibration naturelle est proportionnelle à la vitesse de rotation. L'électronique associée au capteur calcule l'amplitude de la vibration selon la direction orthogonale à la direction d'excitation quelle que soit celle-ci (connue par hypothèse) en combinant l'information recueillie par les transducteurs de détection agissant selon les directions X et Y.

Le capteur peut fonctionner en mode gyromètre : la direction de vibration naturelle est maintenue fixe par rapport au boîtier du capteur en modifiant l'excitation et l'information de sortie est alors une image de l'énergie nécessaire qu'il faut appliquer aux transducteurs d'excitation pour maintenir fixe la direction de vibration naturelle malgré les mouvements du boîtier. Le capteur peut aussi fonctionner en mode gyroscope : la direction de la vibration naturelle est laissée libre et est détectée pour donner l'orientation angulaire du capteur.

## Constitution des transducteurs

On va maintenant décrire les constitutions des transducteurs associés aux masses mobiles interne et externe.

Il y a au moins deux transducteurs d'excitation associés à au moins une des deux masses mobiles (et de préférence deux transducteurs pour chaque masse mobile), agissant sur cette masse respectivement selon la direction X et selon la direction Y. On les appellera $E_x$ et $E_Y$. Il y a au moins deux transducteurs de détection associés à au moins une des deux masses mobiles (et de préférence deux transducteurs pour chaque masse mobile), détectant les mouvements de cette masse selon les directions X et Y et notés $D_X$ et $D_Y$.

Il y a également sur au moins une masse mobile (et de préférence sur chacune des deux masses) au moins un transducteur d'ajustement de la fréquence pour chaque axe X et Y, notés $T_X$ et $T_Y$. Ils sont aptes à appliquer une raideur électrostatique (variable avec la tension électrique) à la masse mobile, raideur qui compense par exemple des inégalités de raideur mécanique de ressorts de suspension éventuellement détectées sur les axes X et Y.

*Transducteurs d'excitation et de détection*

Pour une bonne efficacité, les transducteurs sont de préférence réalisés par des électrodes en peignes interdigités à variation d'entrefer. Chaque transducteur comprend une paire de peignes : il y a un peigne fixe PF dont les dents sont solidaires d'une électrode fixe EF de la plaque usinée et un peigne mobile PM dont les dents, interdigitées avec les dents du peigne fixe, sont solidaires de la masse mobile associée au transducteur considéré.

L'excitation consiste à appliquer une tension alternative entre le peigne mobile et le peigne fixe, à la fréquence de vibration souhaitée (fréquence de résonance mécanique de la masse mobile suspendue). Le mouvement engendré est perpendiculaire aux dents du peigne.

La détection consiste à appliquer une tension de polarisation entre le peigne fixe et le peigne mobile et à observer les variations de charge qui résultent des variations de capacité entre le peigne fixe et le peigne mobile dues aux variations d'espacement entre les dents du peigne fixe et du peigne mobile. Le mouvement mesuré est le mouvement perpendiculaire aux dents du peigne.

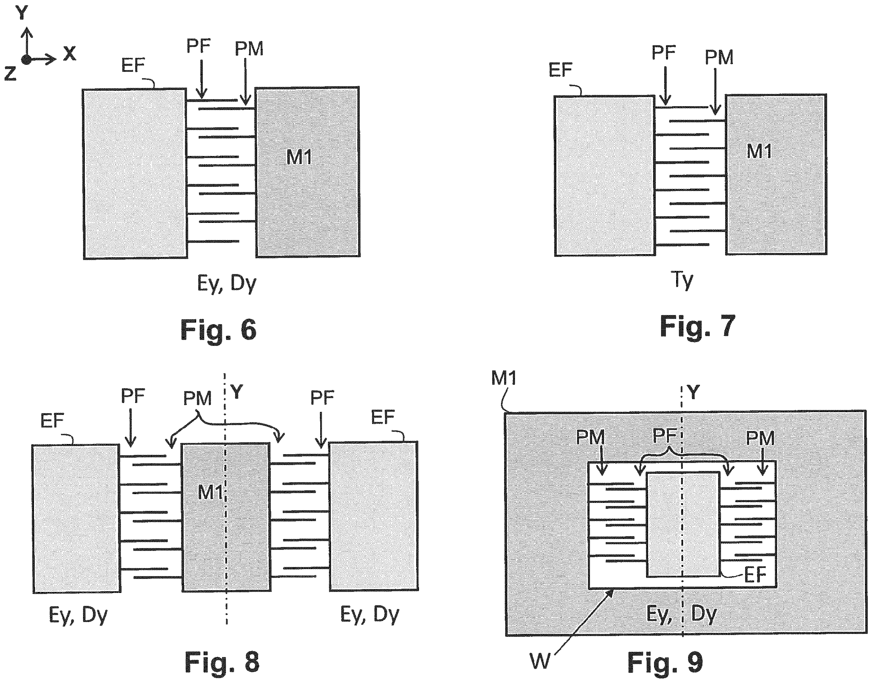

Pour les transducteurs de détection et d'excitation, l'interdigitation des peignes est dissymétrique au repos, les dents du peigne mobile PM sont décalées par rapport au milieu de l'intervalle entre deux dents du peigne fixe PF, comme schématiquement représenté sur la figure 6 pour des transducteurs Ey ou Dy.

*Transducteur d'ajustement de fréquence*

Un transducteur d'ajustement de la fréquence est utile pour la raison suivante :
Grâce à la symétrie de l'architecture selon l'invention, par construction, les différents systèmes masse-ressort du système ont des fréquences propres très proches. Cependant, les défauts de fabrication conduisent en réalité à une structure qui n'est pas parfaitement symétrique et orthotrope. Cela provoque une dégénérescence du mode utile en deux modes orthogonaux orientés selon deux axes orthogonaux dénommés axes principaux de raideur dynamique. Les caractéristiques modales (masse et raideur) de ces deux modes sont alors légèrement différentes et la raideur dynamique du système vibrant varie en fonction de la position angulaire de la vibration. Le comportement du système n'est plus parfaitement isotrope. On cherche donc à compenser ces défauts d'anisotropie de raideur dynamique de la manière suivante : on réalise une opération de compensation qui consiste dans un premier temps à orienter la vibration selon les axes principaux de raideur, ensuite à mesurer l'écart de fréquence de résonance des deux modes, puis égaliser les fréquences de résonance de chaque mode au moyen d'une raideur électrostatique ajustable. Cette raideur électrostatique est délivrée par des transducteurs d'ajustement de la fréquence (« frequency trimming » en anglais) agissant selon les directions X et Y.

Lorsque l'opération de compensation est réalisée, les modes orthogonaux, qu'on peut appeler mode d'excitation et mode de détection, sont identiques, orthogonaux et de fréquences propres égales.

Les transducteurs d'ajustement de fréquence permettent également de compenser des dissymétries de raideur dynamique entre les deux branches du diapason : les deux branches du résonateur peuvent présenter des écarts de masse et de raideur dues aux défauts géométriques de réalisation. En présence de ces défauts, le mouvement diapason n'est plus parfaitement équilibré et rend le résonateur légèrement sensible à son environnement extérieur.

Si l'on dispose de transducteurs électrostatiques d'ajustement de raideur sur chacune des deux branches du diapason dans les deux directions X et Y, il est alors possible de compenser ces dissymétries de raideur dynamique du système.

Les compensations de défauts peuvent être effectuées en usine ou en utilisation à condition de disposer de moyens électroniques adaptés, c'est-à-dire une possibilité d'asservissement à zéro des écarts entre les fréquences. On peut ainsi compenser les effets des évolutions temporelles des propriétés physiques du système résonant causées par le vieillissement ou par les effets thermomécaniques.

Pour les transducteurs d'ajustement de la fréquence, constitués d'une paire de peignes interdigités, l'interdigitation des peignes est symétrique au repos, c'est-à-dire que, les dents du peigne mobile PM sont au milieu de l'intervalle entre deux dents du peigne fixe PF, comme schématiquement représenté sur la figure 7 pour un transducteur Ty.

*Transducteurs de compensation de biais en quadrature*

Pour compenser les défauts d'anisotropie de raideur dynamique de l'ensemble de deux masses vibrantes, on peut éventuellement utiliser des transducteurs électrostatiques supplémentaires, qu'on appelle transducteurs de compensation de biais en quadrature. Ils permettent d'appliquer des forces de raideurs, tendant à aligner exactement (en cas de léger désalignement) les axes principaux de raideur dynamique de l'ensemble mobile sur les directions X et Y des axes de symétrie de l'ensemble.

Ils sont utilisés de la manière suivante, en combinaison avec les transducteurs d'ajustement de fréquence : on effectue d'abord un alignement précis des axes de raideur sur les directions X et Y, on mesure l'écart de fréquence entre les fréquences de vibration des deux modes orthogonaux, puis on égalise les fréquences de résonance de chaque mode en agissant sur les transducteurs d'ajustement de fréquence. Lorsque ces opérations de compensation sont réalisées, les modes orthogonaux, qu'on peut appeler mode d'excitation et mode de détection, sont identiques, orthogonaux et de fréquences propres égales.

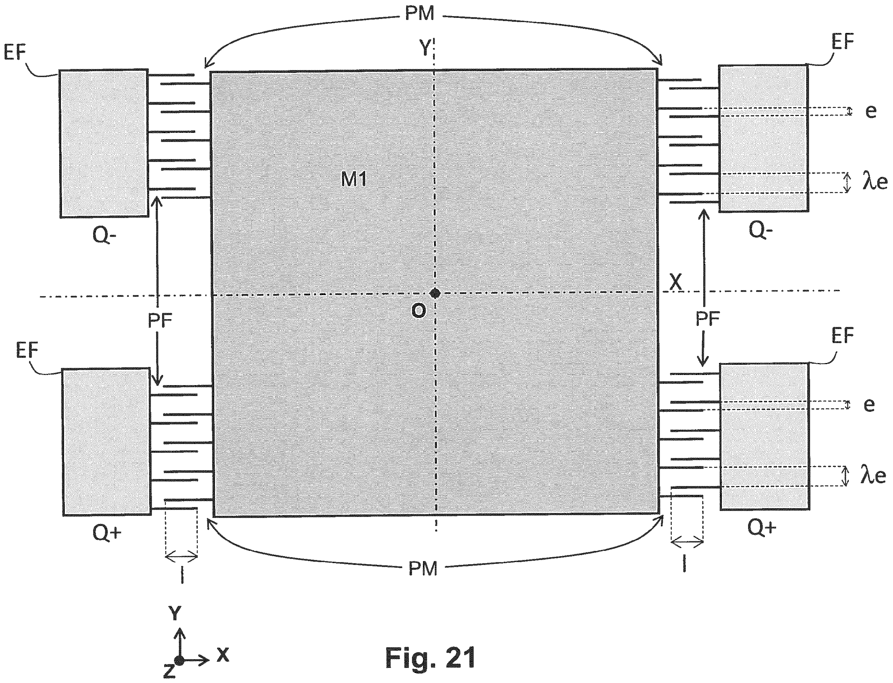

Les transducteurs de compensation du biais en quadrature Q+ et Q- sont également des transducteurs à peignes interdigités. La figure 21 montre un exemple de transducteurs Q+ et Q- ayant leurs électrodes en peignes disposées selon la direction Y. L'interdigitation des peignes est dissymétrique au repos, les doigts d'un demi-peigne n'étant pas exactement au milieu de l'intervalle entre deux doigts de l'autre demi-peigne ; on a au repos des entrefers dissymétriques e et $\lambda e$, $\lambda$ étant un nombre réel positif.

Les termes de raideur créés par l'un des peignes d'un tel transducteur Q+ sont les suivants :

- raideur selon la direction X : $k_{xq} = 0$
- raideur selon la direction Y :

$$k_{yq} = n. \varepsilon. V^2 \frac{h.l}{e^3}\left(1 + \frac{1}{\lambda^3}\right)$$

- raideur de couplage $k_{xyq}$ entre l'axe X et l'axe Y :

$$k_{xyq} = \frac{n.\varepsilon.V^2}{2}\frac{h}{e^3}\left(1 - \frac{1}{\lambda^2}\right)$$ où l'indice q signifie que le terme de raideur est provoqué par le peigne de compensation du biais quadrature,

N étant le nombre de dents par demi-peigne, h l'épaisseur du peigne qui est aussi celle de la plaque de silicium, l la longueur de recouvrement, V la tension continue entre chaque peigne et $\varepsilon$ la permittivité du vide.

Sur l'exemple de la figure 21, comme le biais en quadrature à compenser peut avoir un signe quelconque, on prévoit un autre peigne Q-, symétrique du peigne Q+ par rapport à l'axe de symétrie OX, pour créer un terme de raideur $k_{xyq}$ négatif. On voit alors que les électrodes en peignes solidaires de la masse vibrante sont symétriques par rapport à l'axe de symétrie OY et par rapport à l'axe de symétrie OX, alors que les peignes solidaires des électrodes fixes sont symétriques seulement par rapport à OX.

En fonction du signe du biais en quadrature à compenser, soit les transducteurs de compensation de biais en quadrature positif Q+ reçoivent une tension continue ajustable $V_{Q+}$, soit les transducteurs de compensation de biais en quadrature négatif Q- reçoivent une tension continue ajustable $V_{Q-}$. Les forces électrostatiques créées par ces tensions agissent pour introduire une raideur de couplage $k_{xyq}$ entre le mouvement de la masse selon l'axe X et le mouvement de la masse selon l'axe Y, dont l'expression pour l'ensemble des électrodes en peigne représentées sur la figure 21 est :

$$k_{xyq} = \frac{n.\varepsilon.h}{e^3}\left(1 - \frac{1}{\lambda^2}\right)\left(V_{Q+}^2 - V_{Q-}^2\right)$$

Les valeurs des tensions $V_{Q+}$ et $V_{Q-}$ sont ajustées afin d'obtenir une raideur de couplage $k_{xyq}$ qui modifie la répartition de raideur agissant sur le résonateur de façon à aligner exactement les axes principaux de raideur dynamique de l'ensemble mobile sur les axes de symétrie OX et OY de l'ensemble.

Pour un déplacement $\delta y$ selon la direction Y, la force de raideur de couplage exercée dans la direction X est $F_{xq} = k_{xyq}.\delta y$. Cette force change de signe avec $\delta y$. Elle sera donc de signe opposé pour la masse vibrante interne et pour la masse vibrante externe lorsque ces deux masses sont en mouvement selon le mode de vibration utile en opposition de phase. C'est pourquoi les transducteurs de compensation du biais en quadrature seront disposés de préférence sur la masse vibrante interne et sur la masse externe avec des dissymétries d'interdigitation de peignes de même sens, aussi bien selon la direction X que selon la direction Y.

D'autre part, par principe, la raideur de couplage est commune aux deux axes X et Y. Il suffit donc de disposer d'une paire de transducteurs Q+ et Q- ayant une série de dents alignées selon l'une des directions X ou Y pour pouvoir compenser respectivement un biais en quadrature positif et un biais en quadrature négatif. Néanmoins, on prévoira de préférence selon chaque direction X et Y un transducteur d'action positive et un transducteur d'action négative disposés de manière à optimiser la similitude entre la répartition des forces et des masses mobiles par rapport à l'axe de symétrie X et par rapport à l'axe de symétrie Y, cela de façon à améliorer l'isotropie de la vibration dans le plan XY.

**Configuration des transducteurs par rapport aux masses vibrantes**

On prévoit selon l'invention une configuration des transducteurs qui est compatible avec une architecture du résonateur sans axe privilégié, c'est-à-dire qui ne perturbe pas l'isotropie de la vibration dans toutes les directions du plan XY. La configuration introduit le minimum de couplages et de dissymétries de masse, de raideur, ou de force appliquée, quelle que soit la direction de la vibration, afin de perturber le moins possible l'isotropie et l'équilibre du système résonant.

Tout d'abord, pour chaque transducteur électrostatique, l'axe d'action ou de détection est orienté soit selon la direction X, soit selon la direction Y et les dents des peignes sont configurées pour agir ou détecter selon une seule de ces deux directions, c'est-à-dire qu'elles sont placées perpendiculairement à cette direction.

Pour cela, on emploie l'une des deux configurations d'électrodes en peignes suivantes, pour lesquelles les électrodes en peignes d'un transducteur électrostatique sont configurées de manière symétrique autour de leur axe d'action ou de détection.

Chaque transducteur est dédoublé en deux paires de peignes interdigités symétriques par rapport à l'axe d'action ou de détection X ou Y, chaque paire comprenant un peigne fixe et un peigne mobile.

Selon une première configuration, représentée à la figure 8, les deux paires sont disposées symétriquement de part et d'autre de la masse vibrante, à l'extérieur de celle-ci. Les peignes mobiles PM sont situés à l'extérieur de la masse sur deux côtés opposés de celle-ci, et les peignes fixes PF sont situés de part et d'autre des peignes mobiles, solidaires chacun d'une électrode fixe EF respective.

Selon une seconde configuration, représentée à la figure 9, les deux paires de peignes du transducteur sont juxtaposées symétriquement à l'intérieur d'une ouverture W formée dans la masse mobile. Les deux paires, ainsi qu'une électrode fixe commune EF, sont donc entourées par la masse mobile. La première paire est située d'un côté de l'électrode fixe, la deuxième est située de l'autre côté, symétrique par rapport à une droite orientée dans la direction X ou Y. Cette seconde configuration a l'avantage de réduire le nombre d'électrodes fixes à connecter au circuit électronique.

Avec ces configurations d'électrodes symétriques, un mouvement de masse dirigé selon la direction orthogonale à la direction d'excitation ou de détection ne modifiera pas la surface des peignes en regard, par effet différentiel. Il sera donc au premier ordre sans effet parasite sur la réponse des transducteurs.

Ainsi, les transducteurs sont insensibles aux mouvements orthogonaux à leur direction d'action ou de détection, ce qui les rend aussi insensibles dans cette direction aux dé-positionnements statiques induits par exemple par des accélérations statiques ou des contraintes extérieures exercées sur le capteur.

Les transducteurs d'excitation Ex, Ey appliquent des forces électrostatiques statiques et dynamiques sur la masse vibrante à laquelle elles sont associées, respectivement dans les directions X et Y. D'autre part, les transducteurs de détection Dx, Dy et les transducteurs d'ajustement de la fréquence Tx, Ty (et aussi les transducteurs de compensation de biais Q+ et Q- sur lesquels on reviendra plus loin) peuvent être polarisés par une tension continue et donc sont susceptibles d'appliquer des forces statiques sur la masse vibrante à laquelle ils sont associés.

Pour chaque type de transducteur et chaque direction X et Y, les peignes sont de préférence réalisés de manière à être disposés symétriquement par rapport à l'axe de symétrie OX ou OY de la masse suspendue à laquelle il est associé. Par « peignes disposés symétriquement », on entend que la disposition des dents de peignes mobiles est symétrique par rapport à OX ou OY. Du fait de l'interdigitation dissymétrique des peignes des transducteurs d'excitation et de détection (et aussi des transducteurs Q de compensation de biais), cela peut conduire à placer les peignes fixes de manière légèrement dissymétrique, ce qui n'est pas gênant.

En pratique, cette caractéristique conduit soit à centrer un transducteur unique sur un axe de symétrie OX ou OY des masses mobiles, soit à dédoubler le transducteur en deux demi-transducteurs disposés symétriquement par rapport à cet axe de symétrie OX ou OY.

La résultante des forces appliquées par les transducteurs passe par le centre d'inertie O de la masse suspendue, ce qui permet de ne pas exciter les modes parasites avec des mouvements de rotation ; et la géométrie des peignes mobiles ainsi réalisée permet de limiter au maximum les déséquilibres de la masse autour des axes de symétrie X et Y.

*Organisation géographique par rapport aux axes de symétrie*

De préférence, selon l'invention, pour chaque masse mobile, la disposition géographique par rapport à l'axe de symétrie OX des transducteurs des différents types travaillant selon la direction X (excitation ou détection, mais de préférence aussi ajustement de fréquence et compensation de biais en quadrature) est la même que la disposition autour de l'axe de symétrie OY des transducteurs travaillant selon la direction Y ; et réciproquement la disposition par rapport à l'axe de symétrie OX des transducteurs travaillant selon la direction Y est la même que la disposition par rapport à l'axe OY des transducteurs travaillant selon la direction X.

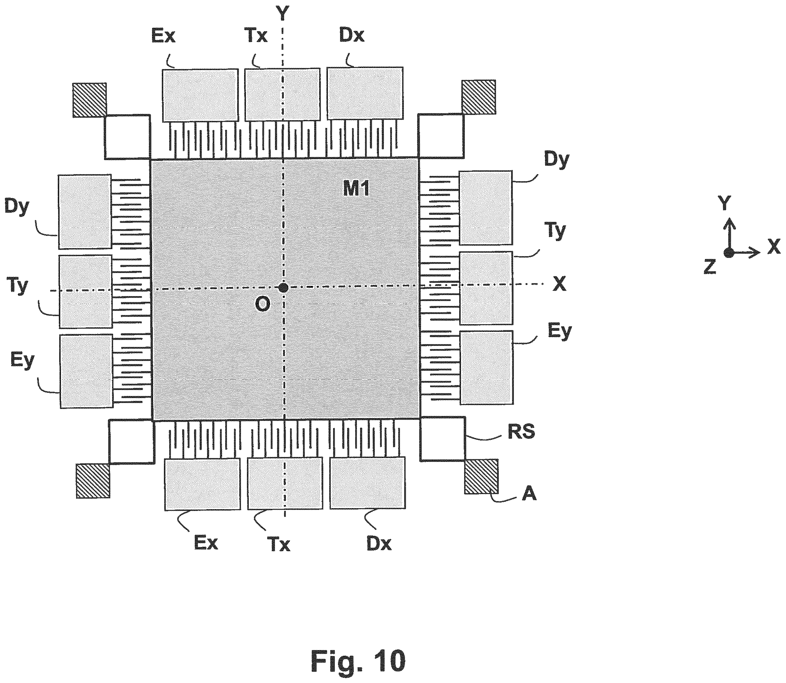

La figure 10 représente une telle configuration pour la masse mobile interne M1.

Il y a:

- deux transducteurs Ex d'excitation d'un mouvement selon la direction X, disposés symétriquement par rapport à l'axe de symétrie général OX de la masse,
- deux transducteurs Ey d'excitation d'un mouvement selon la direction Y, disposés symétriquement par rapport à l'axe de symétrie général OY de la masse,
- deux transducteurs Dx de détection d'un mouvement selon la direction X, disposés symétriquement par rapport à l'axe de symétrie général OX de la masse,
- deux transducteurs Dy de détection d'un mouvement selon la direction Y, disposés symétriquement par rapport l'axe de symétrie général Y de la masse,
- deux transducteurs Tx d'ajustement de fréquence (à interdigitation symétrique) disposés symétriquement par rapport à l'axe OX, agissant selon la direction X, et par ailleurs centrés sur l'axe OY,
- deux transducteurs Ty d'ajustement de fréquence (à interdigitation symétrique) agissant selon la direction Y, disposés symétriquement par rapport à l'axe OY et par ailleurs centrés sur l'axe OX.

Seuls les transducteurs Tx et Ty ont une interdigitation symétrique au repos. Les autres sont tous à interdigitation dissymétrique au repos.

Ces transducteurs sont tous disposés à l'extérieur de la masse mobile. La configuration pourrait être la même pour la masse mobile externe M2 non représentée sur la figure 10.

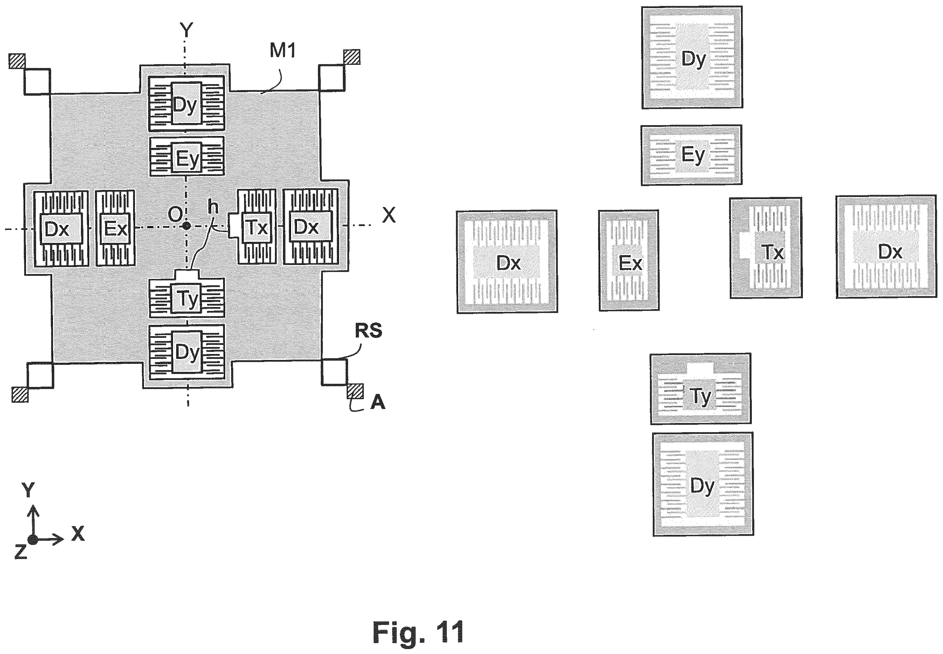

La figure 11 représente une autre configuration générale de la masse mobile interne M1. Dans cette configuration, tous les transducteurs sont placés dans des ouvertures de la masse et non à la périphérie de celle-ci. Ils peuvent être placés dans ce cas tous sur l'axe de symétrie OX ou OY respectivement.

Cet exemple permet de montrer par ailleurs une particularité d'exception mineure possible à la symétrie mécanique générale de la masse mobile par rapport à l'axe OX et l'axe OY : en effet, il n'y a qu'un transducteur d'excitation agissant selon la direction X et un transducteur d'excitation agissant selon la direction Y. Le transducteur Ex selon la direction X est placé symétriquement sur l'axe OX. Mais il n'est pas sur l'axe OY. Le transducteur Ey agissant selon la direction Y est placé symétriquement sur l'axe OY mais il ne peut pas être aussi sur l'axe OX. Par conséquent, au lieu de constituer la symétrie mécanique de l'ensemble mobile en utilisant deux transducteurs Ex placés symétriquement par rapport à l'axe OY, on place le transducteur Tx en position symétrique du transducteur Ex ; de même on place le transducteur Ty en position symétrique du transducteur Ey. Si ces transducteurs ont exactement le même nombre de dents de peigne mobile et les mêmes dimensions de dents et intervalles entre dents, alors la symétrie de l'ensemble mobile est respectée à 100%. Mais s'il y a des différences, la symétrie globale reste respectée mais pas tout-à-fait à 100%.

Il est possible par exemple que le transducteur Tx ait un nombre de dents de peigne mobile différent de celui du transducteur Ex. Ces dents sont à interdigitation symétrique et non dissymétrique ; elles peuvent donc être plus rapprochées et peut être plus nombreuses pour cette raison. S'il en résulte une masse supplémentaire du côté droit (le transducteur Tx est du côté droit), cela risque de créer un balourd du côté droit et on peut compenser ce balourd en faisant une petite ouverture h supplémentaire dans la masse mobile à proximité du transducteur Tx sans prévoir une telle ouverture à proximité du transducteur Ex. C'est ce que montre la figure 11. La même chose est valable pour la symétrie constituée entre le transducteur Ty et le transducteur Ey. Les dispositifs ayant ce type de différence de symétrie mineure entrent dans le cadre de la présente invention.

On notera qu'on peut envisager des configurations de transducteurs dont certains sont placés dans des ouvertures de la masse et d'autres sont placés à la périphérie de la masse, ces derniers étant alors disposés symétriquement par rapport à l'axe de symétrie OX ou OY qui est parallèle à leur direction d'action X ou Y. Dans tous les cas, on prévoit de préférence que la disposition des transducteurs répartis autour de l'axe de symétrie OX est semblable à la disposition des transducteurs répartis autour de l'axe OY. Ainsi, par exemple sur la figure 10 on trouve autour de l'axe OX : deux transducteurs Ty centrés sur l'axe OX, de part et d'autre de la masse, un transducteur Dy et un transducteur Ey de part et d'autre d'un transducteur Ty, et la même chose de part et d'autre de l'autre transducteur Ty, et trois transducteurs Ex, Tx, Dx disposés de chaque côté de la masse symétriquement par rapport à l'axe OX ; réciproquement, on trouve autour de l'axe OY avec exactement la même répartition : deux transducteurs Tx centrés sur l'axe OY, de part et d'autre de la masse, un transducteur Dx et un transducteur Ex de part et d'autre d'un transducteur Tx, et la même chose de part et d'autre de l'autre transducteur Tx, et trois transducteurs Ey, Ty, Dy disposés de chaque côté de la masse symétriquement par rapport à l'axe OY.

Pour la figure 11, c'est la même chose : par rapport à l'axe OX, on trouve sur l'axe OX successivement un transducteur Dx, un transducteur Ex, un transducteur Tx, un transducteur Dx ; réciproquement on trouve sur l'axe OY successivement et avec exactement la même disposition un transducteur Dy, un transducteur Ey, un transducteur Ty, un transducteur Dy.

*Transducteurs de compensation du biais en quadrature*

Pour compenser le biais en quadrature, qui résulte du fait que les directions d'excitation et de détection ne sont pas alignées sur les axes principaux de raideur dynamique, on pourrait choisir des directions d'excitation et de détection orientées selon les axes principaux de raideur dynamique (qui peuvent être légèrement désalignés par rapport aux axes de symétrie OX et OY avant compensation), en agissant simultanément sur les transducteurs des axes X et Y. Mais une telle solution complique l'électronique de contrôle du gyromètre car le repère dans lequel se fait le contrôle électronique des modes de vibration défini par les axes X et Y de sensibilité ou d'action des transducteurs ne coïncide pas avec celui des modes de vibration défini par les axes principaux de raideur dynamique.

Une solution préférable consiste à faire tourner le repère défini par les axes principaux de raideur dynamique de manière à l'aligner sur le repère des axes X et Y dans lequel se fait le contrôle électronique.

L'architecture selon l'invention est compatible avec une telle solution. Pour cela, on ajoute au moins une paire de transducteurs électrostatiques en peignes interdigités à interdigitations dissymétriques Q+ et Q- capables d'appliquer des raideurs électrostatiques de couplage ajustables entre les mouvements selon X et selon Y de la masse à laquelle ils sont associés, respectivement pour compenser un biais en quadrature positif et pour compenser un biais en quadrature négatif. La conception des électrodes des transducteurs Q+ et Q- est donc faite de façon à respecter les caractéristiques de symétrie géométrique des masses mobiles par rapport à l'axe OX comme par rapport à l'axe OY.

Le procédé de compensation du biais en quadrature par des raideurs électrostatiques peut être réalisé lors d'une étape de réglage du gyromètre en fin de fabrication, de façon à corriger le biais en quadrature intrinsèque. On peut aussi appliquer ce procédé de façon continue, en mettant en place dans le circuit électronique un asservissement à zéro des biais en quadrature, ce qui permet de compenser les effets des évolutions temporelles des propriétés physiques du système résonant causées par le vieillissement ou par les effets thermomécaniques.

L'opération de compensation du biais en quadrature sera réalisée de préférence pour chacune des masses du gyromètre indépendamment, c'est-à-dire que chacune des masses vibrantes disposera d'au moins une paire de transducteurs Q+ et Q-. L'interdigitation des peignes du transducteur Q+ est telle que l'application d'une tension de commande introduit une raideur de couplage $k_{xyq}$ entre le mouvement de la masse selon l'axe X et le mouvement de la masse selon l'axe Y, alors que pour la même tension, l'interdigitation des peignes du transducteur Q- applique une raideur de couplage de signe opposé.

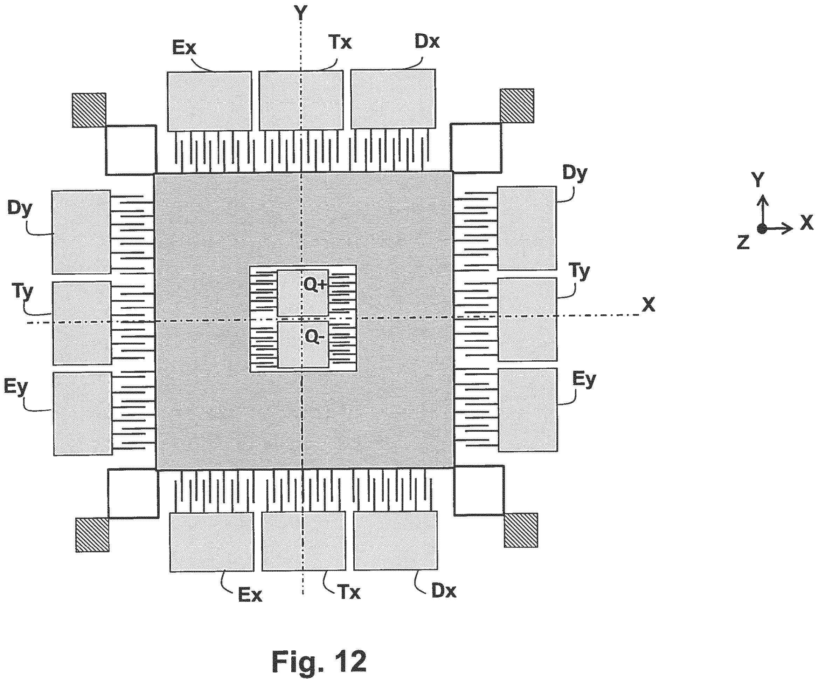

Par principe la raideur de couplage est commune aux deux axes X et Y, il suffit donc de disposer d'une paire de transducteurs Q+ et Q- agissant selon l'une des directions X ou Y pour pouvoir compenser le biais en quadrature, par exemple comme illustré sur la figure 12.

Sur la figure 12, les deux transducteurs de compensation Q+ et Q-ont des électrodes en peignes disposés selon la direction Y. Ils agissent selon la direction Y pour un déplacement selon la direction X et réciproquement ils agissent selon la direction X pour un déplacement selon la direction Y. Ils sont ici placés dans une ouverture de la masse.

Néanmoins, dans ce cas les électrodes mobiles des transducteurs Q+ et Q- peuvent introduire une différence dans la répartition de la masse autour de l'axe de symétrie X, par rapport à la répartition de la masse autour de l'axe de symétrie Y, ce qui réduit l'isotropie de la vibration dans le plan XY.

Pour optimiser la symétrie de l'architecture et donc son équilibre par construction, selon l'invention, on optimise la similitude de la disposition des électrodes Q+ et Q- entre les deux axes de symétrie par l'une des configurations suivantes :

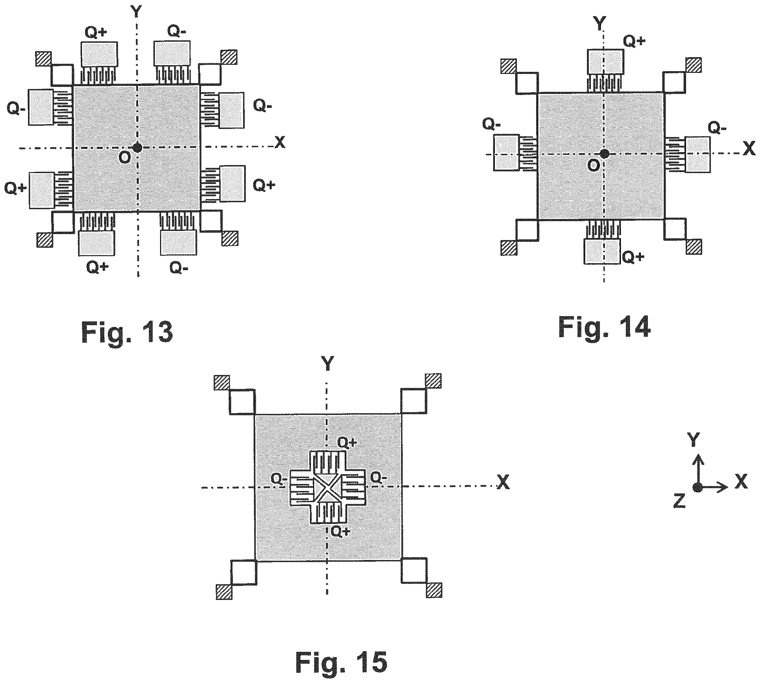

Comme indiqué sur la figure 13, on dispose deux paires symétriques de transducteurs Q+ et Q- (avec toutefois une inversion de la dissymétrie des interdigitations de peignes) disposés selon la direction X et deux autres paires de transducteurs Q+ et Q- disposés selon la direction Y (où les autres types d'électrodes ne sont pas représentées). Les peignes des transducteurs Q+ disposés selon la direction X et selon la direction Y compensent simultanément les biais en quadrature positifs, tandis que les peignes des transducteurs Q- disposés selon la direction X et selon la direction Y compensent simultanément les biais en quadrature négatifs.

Alternativement, on peut comme sur l'exemple de la figure 14 disposer les électrodes Q+ selon un axe de symétrie de la masse vibrante (un de chaque côté de la masse vibrante) et les électrodes Q- selon l'autre axe de symétrie de la masse vibrante, les transducteurs Q+ étant alors disposés selon une direction perpendiculaire aux transducteurs Q-.

On peut également adopter une configuration semblable, mais à l'intérieur de la masse et non à la périphérie, comme par exemple illustré sur la figure 15.

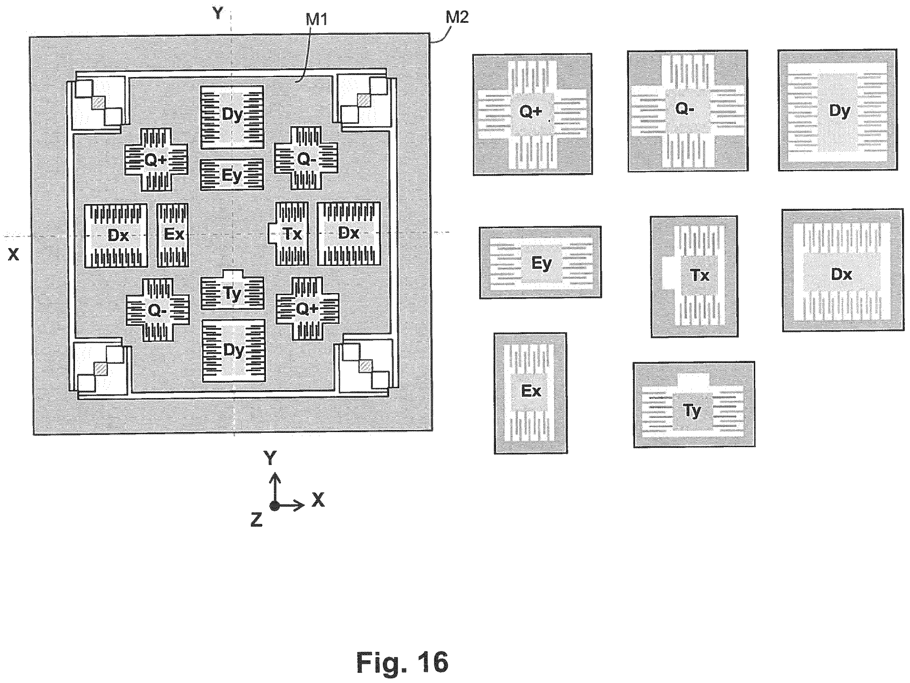

La figure 16 représente un exemple de configuration complète dans laquelle seule la masse mobile interne comporte des transducteurs, la masse mobile externe M2 n'en comportant aucun. Dans cet exemple, tous les transducteurs sont placés dans des ouvertures de la masse mobile. Les transducteurs d'excitation Ex, Ey et de détection Dx, Dy sont constitués comme à la figure 9 (double peigne fixe associé à une même électrode fixe) ; les transducteurs d'ajustement de fréquence sont constitués comme à la figure 11 (avec éventuellement une ouverture de compensation) ; les transducteurs de compensation de biais sont du type représenté à la figure 15, et il y en a quatre dans cet exemple, disposés symétriquement (un transducteur Q+ symétrique d'un transducteur Q-) par rapport à l'axe OX et également par rapport à l'axe OY pour assurer une symétrie mécanique globale de l'ensemble ; les transducteurs d'ajustement de fréquence sont placés comme à la figure 11, c'est-à-dire qu'ils forment le pendant des transducteurs d'excitation Ex et Ey et qu'ils sont éventuellement associés à une petite ouverture de compensation de balourd dans le cas où leurs peignes mobiles ne sont pas exactement les mêmes que les peignes mobiles d'excitation. Enfin, les ressorts de suspension et de couplage sont disposés dans cet exemple comme à la figure 3.

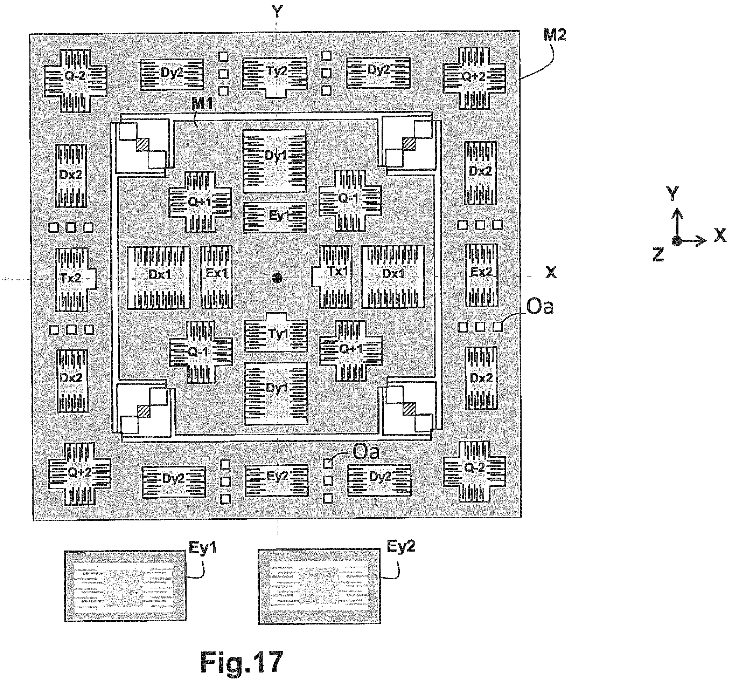

La figure 17 représente un autre exemple de configuration complète dans laquelle les deux masses mobiles sont pourvues de transducteurs et en particulier chacune a au moins un transducteur d'excitation, un transducteur de détection, un transducteur d'ajustement de fréquence. Le numéro 1 est affecté aux transducteurs de la masse interne M1 le numéro 2 est affecté aux transducteurs de la masse externe M2. Dans cet exemple, les deux masses ont également chacune au moins un transducteur de compensation de biais. Pour la masse interne, on a choisi ici la même disposition qu'à la figure 16.

Les transducteurs des deux masses sont placés ici dans des ouvertures de chacune des masses.

Le fait de placer des transducteurs sur chacune des masses présente les avantages suivants : on peut compenser la dissymétrie de raideur dynamique entre les deux branches du diapason ; on rend par ailleurs les transducteurs d'excitation et de détection moins sensibles aux dépositionnements statiques communs aux deux masses (par exemple un dépositionnement selon leur direction d'action sous l'effet d'une accélération) par effet différentiel ; l'excitation par les transducteurs d'excitation et la détection par les transducteurs de détection est plus efficace puisque la surface cumulée des dents de peigne en regard pour ces transducteurs est en gros multipliée par deux si les peignes sont identiques sur les deux masses.

De préférence, le nombre des dents de peigne mobile de chaque type de transducteur (E, ou D, ou T ou Q) est identique sur les deux masses de façon à optimiser par construction l'équilibre entre les deux ensembles mobiles (masses avec les peignes mobiles qui en sont solidaires). Cependant, le nombre de transducteurs de chaque type peut être différent entre les deux masses ; par exemple on voit sur la figure 17 qu'il y a deux transducteurs de détection Dx1 sur la première masse, placés sur l'axe OX et disposés symétriquement de part et d'autre de l'axe OY, alors que chacun des deux transducteurs de détection Dx2 de la deuxième masse est dédoublé en deux transducteurs séparés disposés deux à deux symétriquement par rapport à l'axe OX et symétriquement par rapport à l'axe OY ; chaque transducteur Dx2 a deux fois moins de dents de peigne mobile qu'un transducteur Dx1.

On notera que les transducteurs d'excitation et de détection à interdigitation dissymétrique de la première masse ont de préférence un sens de dissymétrie inversé par rapport au sens de dissymétrie de ceux de la première masse (voir par exemple la vue de détail de Ey1 et Ey2 sur la figure 17), pour mieux tenir compte du fait que le mode de vibration utile est en opposition de phase sur les deux masses. Lorsqu'il y a un dépositionnement statique des masses (induit par exemple par des accélérations statiques ou des contraintes extérieures au capteur), l'entrefer de ces dents de peigne se réduit pour une masse alors qu'il augmente pour l'autre, mais l'efficacité globale des transducteurs d'excitation et de détection reste la même. Il en résulte une insensibilité au premier ordre par rapport à ces dé-positionnements statiques communs aux deux masses.

On remarque aussi sur la figure 17 qu'on peut prévoir si nécessaire des ouvertures Oa d'ajustement dans l'une des masses, ici la masse externe, pour équilibrer la valeur des deux masses.

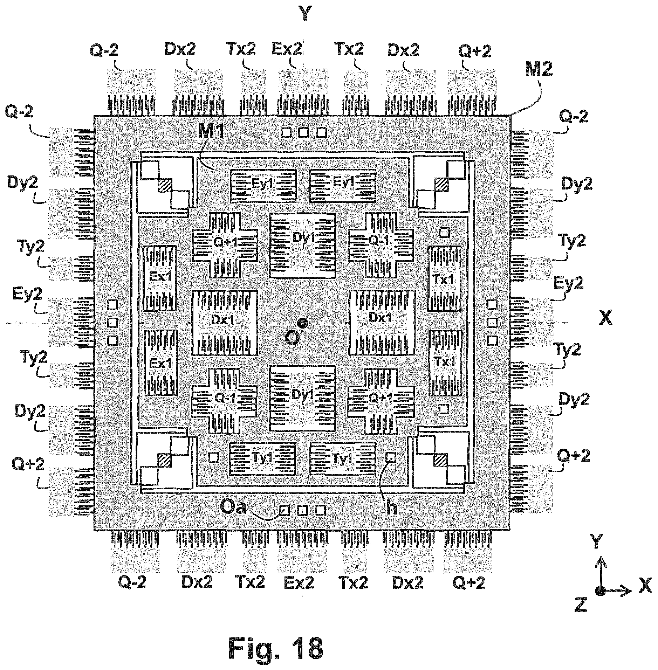

La figure 18 représente une configuration dans laquelle les transducteurs associés à la masse externe sont placés à la périphérie de celle-ci. Ils pourraient aussi être placés sur le bord intérieur de la masse ou partagés entre le bord intérieur et le bord extérieur, ou partagés entre les bords et des ouvertures de la masse.

Par ailleurs dans l'exemple de la figure 18, on peut remarquer qu'on a dédoublé les transducteurs d'excitation Ex1 ou Ey1 de la masse interne et donc aussi les transducteurs d'ajustement Tx1 ou Ty1 qui sont en vis-à-vis des transducteurs Ex1 ou Ey1 par symétrie, et qu'on a ménagé des ouvertures séparées h pour la compensation de l'excès de masse des transducteurs d'ajustement de fréquence Tx1 et Ty1. Ces particularités pourraient être adoptées dans n'importe quelle configuration globale de capteur.

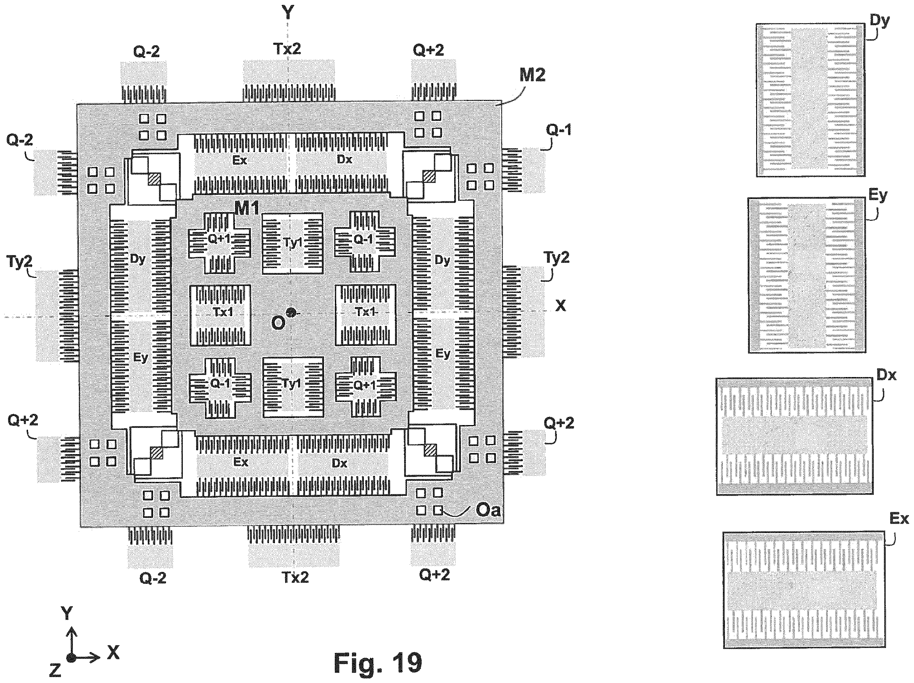

Sur la figure 19, on a encore représenté une possibilité supplémentaire consistant à regrouper les électrodes fixes des transducteurs d'excitation des deux masses mobiles, ces électrodes ayant donc un peigne fixe ayant des dents de peigne tournées vers la masse interne et un autre peigne fixe ayant des dents tournées vers la masse externe, les deux masses ayant des dents de peignes mobiles interdigitées respectivement avec ces deux peignes fixes. On prévoit là encore que la dissymétrie d'entrefer au repos entre les dents fixes et les dents mobiles est inversée entre la masse interne et la masse externe comme le montre le détail du transducteur Ex ou Ey de la figure 19 pour que l'excitation produite par une tension alternative appliquée à l'électrode fixe du transducteur Ex ou Ey entraîne un mouvement d'excitation en opposition de phase sur les deux masses.

La même disposition exactement est adoptée pour les transducteurs de détection, avec également une dissymétrie d'interdigitation opposée sur les deux masses, comme montré par le détail du transducteur Dx ou Dy de la figure 19 .

On remarquera encore que sur la figure 19, contrairement à la figure 18, ce n'est pas un transducteur Tx qui fait le pendant d'un transducteur Ex, mais c'est bien un autre transducteur Ex.

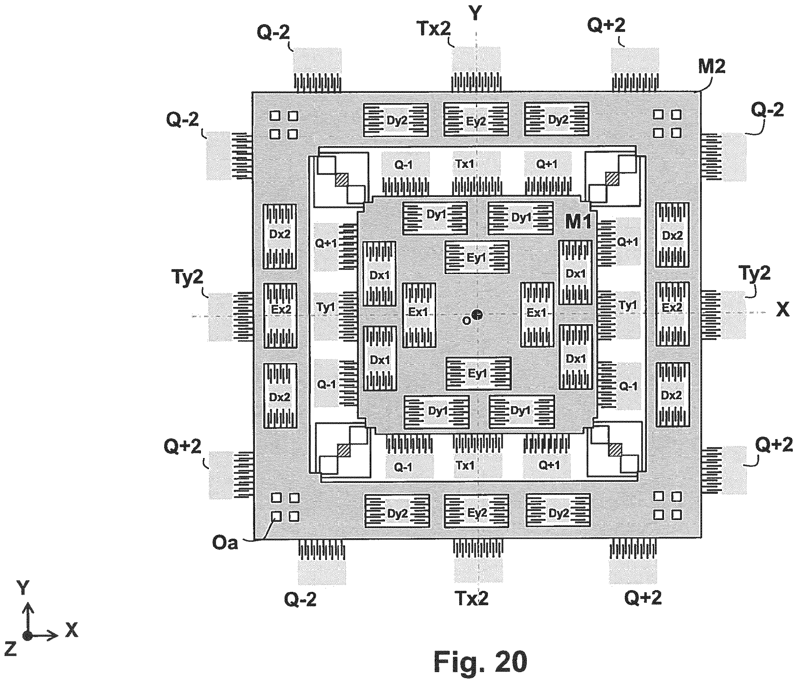

La figure 20 représente encore un exemple dans lequel la symétrie de disposition des masses et des transducteurs est encore améliorée par rapport à l'axe OX et à l'axe OY, en ce que tous les transducteurs agissant dans la direction d'un axe de symétrie ont un pendant identique disposé symétriquement par rapport à l'autre axe de symétrie. Ainsi, il y a quatre transducteurs de détection Dx sur chaque masse symétriques deux à deux par rapport à OX et par rapport à OY ; de manière similaire (avec la même symétrie) quatre transducteurs Dy sur chaque masse symétriques deux à deux par rapport à OX et par rapport à OY ; deux transducteurs d'excitation Ex sur chaque masse placés sur l'axe OX avec une symétrie par rapport à cet axe et deux transducteurs d'excitation Ey sur chaque masse avec une disposition symétrique similaire mais par rapport à l'axe OY; deux transducteurs d'ajustement de fréquence Tx sur chaque masse, placés sur l'axe OY avec une symétrie par rapport à cet axe ; deux transducteurs d'ajustement de fréquence Ty de chaque masse avec une même disposition symétrique mais par rapport à l'axe OX. Les transducteurs de compensation de biais en quadrature sont au nombre de huit sur chaque masse : un transducteur Q+ est symétrique par rapport à l'axe OX d'un autre transducteur Q+ avec toutefois une inversion de la dissymétrie des interdigitations de peignes ; un transducteur Q+ est symétrique par rapport à l'axe OY d'un autre transducteur Q+, avec également une inversion de la dissymétrie des interdigitations de peigne. En outre un transducteur Q- disposé selon la direction X (ou respectivement Y) est symétrique par rapport à l'axe OY (ou respectivement OX) d'un transducteur Q+ disposé selon la même direction X (ou respectivement Y).

On rappelle ici, et on le voit sur cette figure, ou sur d'autres figures par exemple la figure 14, que dans le cas des transducteurs qui sont du type dissymétrique au repos c'est à dire les transducteurs Ex et Ey, Dx et Dy ou Q+ et Q-, la symétrie des paires de peignes interdigités disposés symétriquement par rapport à l'un des axes OX ou OY n'est rigoureusement vraie que pour la partie électrodes mobiles.

Ainsi une structure selon l'invention est "généralement symétrique" suivant les axes OX et OY, comme il a été exposé tout au long de la description, ce qui couvre des dissymétries mineures possibles, telles que celles que l'on vient d'exposer dans le paragraphe précédent, et également des ouvertures dans une ou deux des masses permettant de compenser les balourds de masse autour des axes de symétrie X et Y, de façon à ce que le centre de gravité soit confondu avec le centre de symétrie de la structure.

**Revendications**

1. Capteur angulaire inertiel micro-usiné comprenant

   - deux masses vibrantes (M1, M2), usinées dans une plaque de support généralement plane, mobiles par rapport à la plaque et mobiles l'une par rapport à l'autre, suspendues à des points d'ancrage fixes (A) de la plaque par des ressorts de suspension (RS) et couplées entre elles par des ressorts de couplage (RC) pour vibrer en opposition de phase,

   **caractérisé en ce que** le capteur comprend :

   - au moins un transducteur (Ex) d'excitation d'un mouvement de vibration d'une des masses selon une direction X dans le plan de la plaque, un transducteur (Ey) d'excitation de cette masse selon une direction Y perpendiculaire à la direction X et dans le plan de la plaque, un transducteur (Dx) de détection d'une vibration d'une des masses selon la direction X et un transducteur (Dy) de détection d'une vibration d'une des masses selon la direction Y, les transducteurs d'excitation (Ex, Ey) et de détection (Dx, Dy) comprenant chacun une paire de peignes interdigités ayant un peigne mobile formé d'une rangée de dents solidaires de la masse vibrante et un peigne fixe formé d'une rangée de dents solidaires d'une électrode fixe, l'interdigitation des dents au repos étant dissymétrique,
   - au moins un premier transducteur électrostatique d'ajustement de fréquence (Tx), en peignes interdigités à interdigitation symétrique au repos, apte à appliquer une raideur électrostatique ajustable à la masse vibrante selon la direction X, et un deuxième transducteur électrostatique d'ajustement de fréquence (Ty) semblable au premier et apte à appliquer à la masse vibrante une raideur électrostatique ajustable selon la direction Y,

et **en ce que**

   - les deux masses vibrantes mobiles sont disposées l'une autour de l'autre, en une masse interne (M1) et une masse externe (M2), et leurs centres de gravité (O) sont confondus au repos,
   - les ressorts de couplage (RC) sont reliés chacun d'un côté à la masse interne et de l'autre à la masse externe et ils ont des raideurs identiques selon la direction X et selon la direction Y,
   - les raideurs (K1) des ressorts de suspension de la masse interne sont identiques selon la direction X et selon la direction Y et les raideurs (K2) des ressorts de suspension de la masse externe sont identiques selon la direction X et selon la direction Y, et elles sont proportionnelles aux valeurs (m1 et m2) des masses respectives,
   - l'ensemble mobile constitué par chaque masse vibrante et les parties de transducteurs solidaires de cette masse a une structure généralement symétrique par rapport à un axe de symétrie OX parallèle à la direction X et passant par le centre de gravité de la masse, et également généralement symétrique par rapport à un axe de symétrie OY parallèle à la direction Y et passant par le centre de gravité de la masse.

2. Capteur selon la revendication 1, **caractérisé en ce qu'**au moins une des masses vibrantes est couplée à au moins une paire de transducteurs électrostatiques de compensation d'un biais en quadrature (Q+, Q-), permettant de modifier la répartition des raideurs agissant sur la masse vibrante de façon à aligner les axes principaux de raideur dynamique sur les axes de symétrie OX et OY.

3. Capteur selon la revendication 2, **caractérisé en ce que** la ou les paires de transducteurs électrostatiques de compensation de biais en quadrature sont agencées selon l'une des dispositions suivantes :

   - une paire de transducteurs agissant en compensation de biais positif et en compensation de biais négatif selon la direction X et une autre paire agissant en compensation de biais positif et en compensation de biais négatif selon la direction Y,
   - une paire de transducteurs agissant respectivement en positif et en négatif, ces transducteurs comportant chacun des peignes doubles ayant des dents orientées selon la direction X et des dents orientées selon la direction Y,

- un transducteur de compensation du biais positif agissant selon l'une des directions X et Y, et un transducteur de compensation du biais négatif agissant selon l'autre direction orthogonale à la première.

**4.** Capteur selon l'une des revendications 2 et 3, **caractérisé en ce que** la disposition géographique par rapport à l'axe de symétrie OX des transducteurs de compensation de biais en quadrature est identique, si on fait abstraction de leur polarité d'action, à leur disposition géographique par rapport à l'axe de symétrie OY.

**5.** Capteur selon l'une des revendications précédentes, **caractérisé en ce que** la valeur (m1) de la masse interne (M1) est égale à la valeur (m2) de la masse externe (M2), et la raideur des ressorts de suspension de la masse interne est égale à la raideur des ressorts de suspension de la masse externe.

**6.** Capteur selon l'une des revendications précédentes, **caractérisé en ce que** la disposition géographique par rapport à l'axe de symétrie OX des transducteurs d'excitation et de détection et des transducteurs d'ajustement de fréquence, travaillant selon la direction X est identique à la disposition par rapport à l'axe de symétrie OY des transducteurs exerçant les mêmes fonctions mais travaillant selon la direction Y.

**7.** Capteur selon l'une des revendications précédentes, **caractérisé en ce que** des transducteurs d'excitation (Ex1, Ey1), de détection (Dx1, Dy1), et d'ajustement de fréquence (Tx1, Ty1) ou de compensation de biais en quadrature, sont associés à la masse vibrante interne (M1) et d'autres transducteurs d'excitation (Ex2, Ey2), de détection (Dx2, Ey2), et d'ajustement de fréquence (Tx2, Ty2) ou de compensation de biais en quadrature sont associés à la masse vibrante externe (M2).

**8.** Capteur selon la revendication 7, **caractérisé en ce que** le nombre des dents de peigne de chaque type de transducteur est identique sur la masse interne et sur la masse externe.

**9.** Capteur selon la revendication 6 ou la revendication 7, **caractérisé en ce que** deux transducteurs d'excitation ou de détection agissant sur la masse interne et sur la masse externe dans une même direction X ou Y ont des dissymétries d'interdigitation opposées sur les deux masses.

**10.** Capteur selon l'une quelconque des revendications précédentes, **caractérisé en ce que** chaque transducteur d'excitation ou de détection possède une électrode commune solidaire de deux peignes de dents fixes, la masse vibrante interne et la masse vibrante externe ayant chacune un peigne mobile respectif coopérant avec l'un des deux peignes fixes.

**11.** Capteur selon l'une quelconque des revendications précédentes, **caractérisé en ce qu'**un transducteur associé à une masse vibrante pour l'excitation ou la détection selon une direction X ou Y comprend deux paires de peignes interdigités disposés symétriquement par rapport à la direction d'excitation ou de détection X ou Y, avec l'une des configurations suivantes :

- le transducteur est divisé en deux transducteurs distincts placés symétriquement de part et d'autre de la masse vibrante et ayant leurs peignes mobiles placés symétriquement de part et d'autre de la masse vibrante, et les peignes fixes étant disposés symétriquement de part et d'autre de la masse,
- ou bien les dents des peignes mobiles sont situées symétriquement de part et d'autre d'une électrode fixe à l'intérieur d'une ouverture de la masse vibrante, cette dernière entourant la paire de peignes et l'électrode fixe.

**12.** Capteur selon l'une quelconque des revendications précédentes, **caractérisé en ce que** la configuration générale de l'ensemble des masses mobiles, et des peignes mobiles associés à ces masses est globalement symétrique par rapport à l'axe de symétrie OX et également par rapport à l'axe de symétrie OY, de préférence selon une symétrie d'ordre 4, c'est-à-dire une invariance de la configuration lorsqu'on fait tourner l'ensemble de 90° autour de l'axe OZ, et ceci avec l'exception possible de dissymétries mineures dues directement ou indirectement au fait que les transducteurs d'ajustement de fréquence sont à interdigitation symétrique au repos contrairement aux transducteurs d'excitation et de détection qui sont à interdigitation dissymétrique au repos.

**13.** Procédé de compensation des défauts d'anisotropie d'un capteur selon l'une des revendications 2 à 4, comprenant :

- une première étape d'alignement précis des axes principaux de raideur dynamique de l'ensemble mobile sur les directions X et Y, obtenue par l'ajustement de tensions appliquées aux transducteurs de compensation du biais en quadrature (Q+ ou Q-),
- et une deuxième étape d'égalisation des fréquences de résonance selon la direction X et selon la direction Y, obtenue par l'ajustement de tensions appliquées aux transducteurs d'ajustement de fréquence (Tx ou Ty).

**Patentansprüche**

1. Mikrobearbeiteter Drehratensensor, umfassend

   - zwei Vibrationsmassen (M1, M2), die in eine generell ebene Trägerplatte gearbeitet sind, die in Bezug auf die Platte mobil sind und in Bezug aufeinander mobil sind, die an festen Verankerungspunkten (A) der Platte durch Aufhängefedern (RS) aufgehängt sind und untereinander durch Verbindungsfedern (RC) verbunden sind, um in gegenüberliegender Phase zu vibrieren,

   **dadurch gekennzeichnet, dass** der Sensor Folgendes umfasst:

   - mindestens einen Messumformer (Ex) zum Erregen einer Vibrationsbewegung einer der Massen gemäß einer Richtung X auf der Ebene der Platte, einen Messumformer (Ey) zum Erregen dieser Masse gemäß einer Richtung Y senkrecht zu der Richtung X und auf der Ebene der Platte, einen Messumformer (Dx) zum Erfassen einer Vibration einer der Massen gemäß der Richtung X und einen Messumformer (Dy) zum Erfassen einer Vibration einer der Massen gemäß der Richtung Y, wobei die Erregungsmessumformer (Ex, Ey) und die Erfassungsmessumformer (Dx, Dy) jeweils ein Paar ineinandergreifender Kämme umfassen, die einen mobilen Kamm aufweisen, der aus einer Reihe von Zähnen gebildet ist, die fest mit der Vibrationsmasse verbunden sind, und einen festen Kamm, der aus einer Reihe von Zähnen gebildet ist, die fest mit einer festen Elektrode verbunden sind, wobei der Eingriff der Zähne im Ruhezustand unsymmetrisch ist,
   - mindestens einen ersten elektrostatischen Messumformer zur Frequenzeinstellung (Tx) mit Kämmen, die im Ruhezustand mit symmetrischem Eingriff eingreifen, der in der Lage ist, eine einstellbare elektrostatische Steifheit auf die Vibrationsmasse gemäß der Richtung X anzuwenden, und einen zweiten elektrostatischen Messumformer zur Frequenzeinstellung (Ty), der mit dem ersten vergleichbar und in der Lage ist, auf die Vibrationsmasse eine einstellbare elektrostatische Steifheit gemäß der Richtung Y anzuwenden,

   und dadurch, dass

   - die zwei mobilen Vibrationsmassen umeinander als eine innere Masse (M1) und eine äußere Masse (M2) angeordnet sind, und ihre Schwerpunkte (O) im Ruhezustand vertauscht sind,
   - die Verbindungsfedern (RC) jeweils auf einer Seite mit der inneren Masse und auf der anderen Seite mit der äußere Massen verbunden sind und identische Steifheiten gemäß der Richtung X und gemäß der Richtung Y aufweisen,
   - die Steifheiten (K1) der Aufhängefedern der inneren Masse gemäß der Richtung X und gemäß der Richtung Y identisch sind, und die Steifheiten (K2) der Aufhängefedern der äußeren Masse gemäß der Richtung X und gemäß der Richtung Y identisch sind, und sie proportional zu den Werten (m1 und m2) der jeweiligen Massen sind,
   - die mobile Einheit, die von jeder Vibrationsmasse und den Messumformerteilen, die mit dieser Masse fest verbunden sind, gebildet wird, eine generell symmetrische Struktur in Bezug auf eine Symmetrieachse OX parallel zur Richtung X aufweist und durch den Schwerpunkt der Masse verläuft, und ebenso generell symmetrisch in Bezug auf eine Symmetrieachse OY parallel zur Richtung Y ist und durch den Schwerpunkt der Masse verläuft.

2. Sensor nach Anspruch 1, **dadurch gekennzeichnet, dass** mindestens eine der Vibrationsmassen mit mindestens einem Paar elektrostatische Ausgleichsmessumformer eines Quadraturbias (Q+, Q-) gekoppelt ist, der ermöglicht, die Verteilung der Steifheiten zu modifizieren, die auf die Vibrationsmasse wirken, um die Hauptachsen dynamischer Steifheit auf die Symmetrieachsen OX und OY auszurichten.

3. Sensor nach Anspruch 2, **dadurch gekennzeichnet, dass** das oder die Paare elektrostatischer Ausgleichsmessumformer von Quadraturbias gemäß einer der folgenden Anordnungen angeordnet sind:

   - ein Paar Messumformer, das zum Ausgleich von positivem Bias und zum Ausgleich von negativem Bias gemäß der Richtung X wirkt, und ein weiteres Paar, das zum Ausgleich von positivem Bias und zum Ausgleich von negativem Bias gemäß der Richtung Y wirkt,
   - ein Paar Messumformer, die jeweils positiv und negativ wirken, wobei diese Messumformer jeweils doppelte Kämme mit Zähnen umfassen, die gemäß der Richtung X ausgerichtet sind, und mit Zähnen, die gemäß der Richtung Y ausgerichtet sind,
   - ein Ausgleichsmessumformer des positiven Bias, der gemäß einer der Richtungen X und Y wirkt, und ein Ausgleichsmessumformer des negativen Bias, der gemäß einer anderen Richtung orthogonal zur ersten Richtung wirkt.

4. Sensor nach einem der Ansprüche 2 und 3, **dadurch gekennzeichnet, dass** die geografische Anordnung in Bezug auf die Symmetrieachse OX der Ausgleichsmessumformer von Quadraturbias abgesehen von ihrer Wirkungspolarität identisch wie ihre geografische Anordnung in Bezug auf die Symmetrieachse OY ist.

5. Sensor nach einem der vorherigen Ansprüche, **dadurch gekennzeichnet, dass** der Wert (m1) der inneren Masse (M1) gleich dem Wert (m2) der äußeren Masse (M2) ist, und die Steifheit der Aufhängefedern der inneren Masse gleich der Steifheit der Aufhängefedern der äußeren Masse ist.

6. Positiver Biassensor nach einem der vorherigen Ansprüche, **dadurch gekennzeichnet, dass** die geografische Anordnung in Bezug auf die Symmetrieachse OX der Erregungsmessumformer und Erfassungsmessumformer und der Messumformer zur Frequenzeinstellung, die gemäß der Richtung X arbeiten, identisch wie die Anordnung in Bezug auf die Symmetrieachse OY der Messumformer ist, die dieselbe Funktion ausführen, aber gemäß der Richtung Y arbeiten.

7. Sensor nach einem der vorherigen Ansprüche, **dadurch gekennzeichnet, dass** die Erregungsmessumformer (Ex1, Ey1), Erfassungsmessumformer (Dx1, Dy1) und Messumformer zur Frequenzeinstellung (Tx1, Ty1) oder zum Ausgleich von Quadraturbias mit der inneren Vibrationsmasse (M1) verbunden sind, und die anderen Erregungsmessumformer (Ex2, Ey2), Erfassungsmessumformer (Dx2, Ey2) und Messumformer zur Frequenzeinstellung (Tx2, Ty2) oder zum Ausgleich von Quadraturbias mit der äußeren Vibrationsmasse (M2) verbunden sind.

8. Sensor nach Anspruch 7, **dadurch gekennzeichnet, dass** die Anzahl von Kammzähnen von jedem Messumformertyp an der inneren Masse und an der äußeren Masse identisch ist.

9. Sensor nach Anspruch 6 oder Anspruch 7, **dadurch gekennzeichnet, dass** zwei Erregungsmessumformer oder Erfassungsmessumformer, die auf die innere Masse und auf die äußere Masse in einer selben Richtung X oder Y wirken, Asymmetrien im gegenüberliegenden Eingriff an den zwei Massen aufweisen.

10. Sensor nach einem der vorherigen Ansprüche, **dadurch gekennzeichnet, dass** jeder Erregungsmessumformer oder Erfassungsmessumformer eine gemeinsame Elektrode besitzt, die mit zwei Kämmen mit festen Zähnen fest verbunden ist, wobei die innere Vibrationsmasse und die äußere Vibrationsmasse jeweils einen mobilen Kamm aufweisen, der jeweils mit einem der zwei festen Kämme zusammenwirkt.

11. Sensor nach einem der vorherigen Ansprüche, **da-**

**durch gekennzeichnet, dass** ein Messumformer, der zur Erregung oder der Erfassung gemäß einer Richtung X oder Y mit einer Vibrationsmasse verbunden ist, zwei Paare ineinandergreifender Kämme umfasst, die symmetrisch in Bezug auf die Erregungsrichtung oder die Erfassungsrichtung X oder Y angeordnet sind, mit einer der folgenden Konfigurationen:

- der Messumformer ist in zwei verschiedene Messumformer unterteilt, die symmetrisch auf der einen und anderen Seite der Vibrationsmasse platziert sind, und deren mobile Kämme symmetrisch auf der einen und anderen Seite der Vibrationsmasse platziert sind, und wobei die festen Kämme symmetrisch auf der einen und anderen Seite der Masse angeordnet sind,
- oder aber die Zähne der mobilen Kämme befinden sich symmetrisch auf der einen und anderen Seite einer festen Elektrode im Innern einer Öffnung der Vibrationsmasse, wobei letztere das Paar Kämme und die feste Elektrode umgibt.

12. Sensor nach einem der vorherigen Ansprüche, **dadurch gekennzeichnet, dass** die allgemeine Konfiguration der Einheit der mobilen Massen und der mobilen Kämme, die mit diesen Massen verbunden sind, allgemein symmetrisch in Bezug auf die Symmetrieachse OX und auch in Bezug auf die Symmetrieachse OY ist, vorzugsweise gemäß einer Symmetrie der Ordnung 4, das heißt, einer Invarianz der Konfiguration, wenn man die Einheit 90° um die Achse OZ dreht, und dies mit der möglichen Ausnahme von geringfügigen Asymmetrien, die direkt oder indirekt auf den Umstand zurückzuführen sind, dass die Messumformer zur Frequenzeinstellung im Ruhezustand in symmetrischem Eingriff sind, im Gegensatz zu den Erregungsmessumformern und Erfassungsmessumformern, die im Ruhezustand in unsymmetrischem Eingriff sind.

13. Verfahren zum Ausgleich von Anisotropie-Fehlern eines Sensors nach einem der Ansprüche 2 bis 4, umfassend:

- eine erste exakte Ausrichtungsstufe der Hauptachsen der dynamischen Steifheit der mobilen Einheit in die Richtungen X und Y, die durch die Anpassung von Spannungen, die auf die Ausgleichsmessumformer des Quadraturbias (Q+ oder Q-) angewendet werden, erlangt wird,
- und eine zweite Ausgleichsstufe von Resonanzfrequenzen gemäß der Richtung X und gemäß der Richtung Y, die durch die Einstellung von Spannungen, die auf die Messumformer zur Frequenzeinstellung (Tx oder Ty) angewendet werden, erlangt wird.

**Claims**

1.  A micro-machined inertial angular sensor comprising:

    - two vibrating masses (M1, M2), which are machined in a generally flat support wafer and are movable relative to the wafer and relative to one another, suspended from fixed anchoring points (A) of the wafer by suspension springs (RS) and coupled together by coupling springs (RC) in order to vibrate in phase opposition;

    **characterised in that** the sensor comprises:

    - at least one transducer (Ex) for exciting a vibration movement of one of the masses in a direction X in the plane of the wafer, a transducer (Ey) for exciting said mass in a direction Y perpendicular to the direction X and in the plane of the wafer, a transducer (Dx) for detecting a vibration of one of the masses in the direction X and a transducer (Dy) for detecting a vibration of one of the masses in the direction Y, the excitation (Ex, Ey) and detection (Dx, Dy) transducers each comprising a pair of interdigitated combs having a movable comb formed by a row of teeth rigidly connected to the vibrating mass and a fixed comb formed by a row of teeth rigidly connected to a fixed electrode, the interdigitation of the teeth at rest being dissymmetrical;
    - at least one first frequency adjustment electrostatic transducer (Tx), with interdigitated combs with symmetrical interdigitation at rest, capable of applying an adjustable electrostatic stiffness to the vibrating mass in the direction X, and a second frequency adjustment electrostatic transducer (Ty) similar to the first and capable of applying an adjustable electrostatic stiffness to the vibrating mass in the direction Y;

    and **in that**:

    - the two movable vibrating masses are disposed one around the other, as an inner mass (M1) and an outer mass (M2), and their centres of gravity (O) coincide at rest;
    - the coupling springs (RC) are each linked on one side to the inner mass and on the other side to the outer mass and they have identical stiffnesses in the direction X and in the direction Y;
    - the stiffnesses (K1) of the springs for suspending the inner mass are identical in the direction X and in the direction Y and the stiffnesses (K2) of the springs for suspending the outer mass are identical in the direction X and in the direction Y, and they are proportional to the values (m1 and m2) of the respective masses;

    - the structure of the movable assembly formed by each vibrating mass and the parts of transducers rigidly connected to said mass is generally symmetrical relative to an axis of symmetry OX parallel to the direction X and passing through the centre of gravity of the mass, and is also generally symmetrical relative to an axis of symmetry OY parallel to the direction Y and passing through the centre of gravity of the mass.

2.  The sensor as claimed in claim 1, **characterised in that** at least one of the vibrating masses is coupled to at least one pair (Q+, Q-) of electrostatic transducers for compensating a quadrature bias, allowing the distribution of the stiffnesses acting on the vibrating mass to be modified so as to align the main axes of dynamic stiffness with the axes of symmetry OX and OY.

3.  The sensor as claimed in claim 2, **characterised in that** the one or more pair(s) of quadrature bias compensation electrostatic transducers is/are arranged according to one of the following arrangements:

    - a pair of transducers acting by compensating positive bias and by compensating negative bias in the direction X and another pair acting by compensating positive bias and by compensating negative bias in the direction Y;
    - a pair of transducers respectively acting in the positive and in the negative, said transducers each comprising double combs having teeth oriented in the direction X and teeth oriented in the direction Y;
    - a transducer for compensating the positive bias acting in one of the directions X and Y, and a transducer for compensating the negative bias acting in the other direction orthogonal to the first.

4.  The sensor as claimed in any one of claims 2 and 3, **characterised in that** the geographical arrangement relative to the axis of symmetry OX of the quadrature bias compensation transducers is identical, if their polarity of action is not taken into account, to their geographical arrangement relative to the axis of symmetry OY.

5.  The sensor as claimed in any one of the preceding claims, **characterised in that** the value (m1) of the inner mass (M1) is equal to the value (m2) of the outer mass (M2), and the stiffness of the springs for suspending the inner mass is equal to the stiffness of the springs for suspending the outer mass.

6.  The sensor as claimed in any one of the preceding claims, **characterised in that** the geographical arrangement relative to the axis of symmetry OX of the excitation and detection transducers and of the frequency adjustment transducers, working in the direction X, is identical to the arrangement relative to the axis of symmetry OY of the transducers exercising the same functions but working in the direction Y.

7. The sensor as claimed in any one of the preceding claims, **characterised in that** excitation (Ex1, Ey1), detection (Dx1, Dy1) and frequency adjustment (Tx1, Ty1) or quadrature bias compensation transducers are associated with the inner vibrating mass (M1) and other excitation (Ex2, Ey2), detection (Dx2, Dy2) and frequency adjustment (Tx2, Ty2) or quadrature bias compensation transducers are associated with the outer vibrating mass (M2).

8. The sensor as claimed in claim 7, **characterised in that** the number of comb teeth of each type of transducer is identical on the inner mass and on the outer mass.

9. The sensor as claimed in claim 6 or claim 7, **characterised in that** two excitation or detection transducers acting on the inner mass and on the outer mass in the same direction X or Y have opposing interdigitation dissymmetries on the two masses.

10. The sensor as claimed in any one of the preceding claims, **characterised in that** each excitation or detection transducer has a common electrode rigidly connected to two fixed teeth combs, the inner vibrating mass and the outer vibrating mass each having a respective movable comb cooperating with one of the two fixed combs.

11. The sensor as claimed in any one of the preceding claims, **characterised in that** a transducer associated with a vibrating mass for excitation or detection in a direction X or Y comprises two pairs of interdigitated combs symmetrically disposed relative to the direction of excitation or of detection X or Y, with one of the following configurations:

- the transducer is divided into two distinct transducers symmetrically placed on either side of the vibrating mass and having their movable combs symmetrically placed on either side of the vibrating mass, and the fixed combs being symmetrically disposed on either side of the mass; or else
- the teeth of the movable combs are symmetrically located on either side of an electrode fixed inside an aperture of the vibrating mass, said vibrating mass surrounding the pair of combs and the fixed electrode.

12. The sensor as claimed in any one of the preceding claims, **characterised in that** the general configuration of the assembly of movable masses and of movable combs associated with these masses is generally symmetrical relative to the axis of symmetry OX and also relative to the axis of symmetry OY, preferably according to a symmetry of the order of 4, namely an invariance of the configuration when the assembly is rotated by 90° about the axis OZ, and this is the case with the possible exception of minor dissymmetries that are directly or indirectly due to the fact that the frequency adjustment transducers have symmetrical interdigitation at rest, as opposed to the excitation and detection transducers that have dissymmetrical interdigitation at rest.

13. A method for compensating anisotropy defects of a sensor as claimed in any one of claims 2 to 4, comprising:

- a first step of precisely aligning the main axes of dynamic stiffness of the movable assembly with the directions X and Y, which is achieved by adjusting the voltages applied to the quadrature bias compensation transducers (Q+ or Q-);
- and a second step of equalising resonant frequencies in the direction X and in the direction Y, which is achieved by adjusting the voltages applied to the frequency adjustment transducers (Tx or Ty).

Fig. 1

Fig. 2

Fig. 3

Fig. 4

**Fig. 5**

EP 2 960 625 B1

**Fig. 6**

**Fig. 7**

**Fig. 8**

**Fig. 9**

**Fig. 10**

EP 2 960 625 B1

Fig. 11

Fig. 12

**Fig. 14**

**Fig. 13**

**Fig. 15**

Fig. 16

Fig.17

Fig. 18

Fig. 19

Fig. 20

**Fig. 21**

EP 2 960 625 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2846740
- FR 2859527
- FR 2983574
- FR 2859528